(19)

Europäisches
Patentamt

European
Patent Office

Office européen
des brevets

(11) **EP 3 018 620 A1**

(12) **EUROPEAN PATENT APPLICATION**

(43) Date of publication:
**11.05.2016 Bulletin 2016/19**

(51) Int Cl.:
***G06Q 30/02*** *(2012.01)*

(21) Application number: **14306790.8**

(22) Date of filing: **07.11.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Ajwani, Deepak**<br>**DUBLIN, 15 (IE)**<br>• **Sala, Alessandra**<br>**DUBLIN, 15 (IE)**<br>• **Jul, Eric**<br>**DUBLIN, 15 (IE)** |
| (71) Applicant: **ALCATEL LUCENT**<br>**92100 Boulogne-Billancourt (FR)** | (74) Representative: **Coghlan, Judith Elizabeth Kensy et al**<br>**Script IP Limited**<br>**Turnpike House**<br>**18 Bridge Street**<br>**Frome BA11 1BB (GB)** |
| (72) Inventors:<br>• **Mai, Tiep**<br>**DUBLIN, 15 (IE)** | |

(54) **Characterising user behaviour**

(57) Aspects and embodiments provide a method of characterising user behaviour in an IP based data network based on a data stream comprising an indication of IP traffic associated with a user. Also provided are a computer program product and device operable to perform that method. The method comprises: receiving an identifier and an indication of arrival time associated with a data point in the data stream; determining an inter-arrival time between adjacent data points in the data stream; analysing a plurality of inter-arrival times in the data stream associated with the user to determine a personalised user inter-arrival time threshold; and using the determined personalised user inter-arrival threshold to group said data points in said data stream into one or more clusters, each cluster of data points representing an action of the user within the IP based data network. Aspects and embodiments described may be combined to provide a system which can be configured to provide an accurate medium-grain user behaviour analysis. That analysis may, for example, be based on truncated URL traffic traces associated with a user.

FIG. 2 User Behavior Analysis System

**Description**

FIELD OF THE INVENTION

The invention relates to a method of characterising user behaviour in an IP based data network based on a data stream comprising an indication of IP traffic associated with a user, a computer program product and a device operable to perform that method.

BACKGROUND

It is possible to analyse data associated with an individual operating in an IP based network and to use that analysis to provide that individual with enhanced, or more appropriate, data or services. Behaviour analysis of a user, for example, based on their web activities, has potential to transform their online experience. Behaviour analysis at a user level may, for example, enable service providers to personalise content for a user, thus providing an enhanced user experience. Behaviour analysis may, for example, allow a service provider to make recommendations or better target services.

Furthermore, behaviour analysis may enable prediction, across users, of global demand patterns across a network. Accurate prediction may facilitate more efficient overall network operation. It will be understood that behaviour analysis can be useful to network service providers thereby allowing them to monitor network activities, predict future load and provision resources based on user profiles to ensure satisfaction across a user spectrum.

Behaviour analysis at a user level may be made more difficult by issues relating to user privacy. A network user may become uncomfortable if personalization is taken too far. Whilst it maybe beneficial to provide personalized services based on user behaviour analysis, that benefit may need to be balanced against a requirement to preserve individual user privacy. In other words, it may be necessary to find a middle path allows for potential benefits of personalized services whilst safeguarding fine-grained sensitive user information such as: specific search queries, personal entertainment preferences, purchased products, location, legal information and similar.

It is desired to provide a method which maybe used to allow for provision of personalized services based on user behaviour analysis, whilst balancing that benefit against preservation of individual user privacy.

SUMMARY

A first aspect provides a method of characterising user behaviour in an IP based data network, based on a data stream comprising an indication of IP traffic associated with a user; the method comprising: receiving an identifier and an indication of arrival time associated with a data point in the data stream; determining an inter-arrival time between adjacent data points in the data stream; analysing a plurality of inter-arrival times in the data stream associated with the user to determine a personalised user inter-arrival time threshold; and using the determined personalised user inter-arrival threshold to group the data points in the data stream into one or more clusters, each cluster of data points representing an action of the user within said IP based data network.

The first aspect recognises that one challenge which may arise when analysing operator-side URL traces in relation to a user is that of noise caused by unintentional web traffic. For example, when a user performs a micro action like web click, chat reply or similar, it typically generates many HTTP records related to the representative activity together with a large number of secondary records related to, for example, advertisements, web analytics, web scripts etc. Aspects recognise that in order to characterize user activity precisely, it is helpful to filter representative URLs from noisy URL traces.

The first aspect may use parameters of a traffic trace associated with a user data stream. Those traffic trace parameters used for user behaviour analysis may comprise, in general, a series of pairs *<indication of hostname, arrival time>*. Additional information, for example, download size, upload size and similar, may be used in some embodiments to help to improve precision of the various machine learning techniques used in accordance with traffic trace analysis methods in accordance with aspects and embodiments.

The first aspect operates to perform "burst decomposition" in relation to a user traffic trace. The method of the first aspect may operate to decompose a stream of URLs into clusters that correspond to user micro-actions such as: web clicks, chat replies, etc. The decomposition of the stream into "chunks" may be based on timing characteristics of the URLs forming the stream. The chunks or "clusters" of URLs, thus identified, are referred to herein as a cluster or "URL burst".

Truncation processes described in more detail below may help to preserve user privacy but increases the difficulty level associated with user behaviour analysis. URL truncation restricts use of complex analysis since some information, for example, a file name suffix (e.g., *jpg, .mp3, .mpg* etc.) or the arguments of a HTTP GET request (e.g., the values *"BAC",* "*depression* "in the above URLs) are not available to be used to help identify so-called representative URLs.

Aspects and embodiments described may provide methods of use when analysing truncated URL traces to infer user behaviour. Aspects and embodiments may provide methods which can be implemented to allow for creation of an accurate medium-grain user activity pattern or "user profile". Typical approaches to creation of a user profile based on user behaviour analysis rely on full URL traces. Aspects and embodiments provide methods which may be of use in relation to, for example, truncated URL traces.

In one embodiment, the identifier associated with a data point comprises: at least one of: a URL, a truncated URL, or an IP address.

Aspects and embodiments recognise that a data set used for behaviour analysis maybe carefully determined, and, for example, only reveal some detail relating to an activity made by a user. That is to say, an available data set in relation to a user may comprise a truncated or semi-complete data set, rather than a full representation of user activity.

Aspects recognise that one way in which a balance between user privacy and personalized services can be achieved is by stripping a data set to be used for user profiling analysis of any potentially sensitive user information. Aspects recognise that data analysis may be performed on such a stripped down data set and inference of medium-grained user activity may still be achieved.

It will be appreciated that analysis of truncated and stripped down data sets in relation to individual users may become more important in the context of increasingly tightening privacy legislation in various countries. Privacy legislation is likely to make network operators more careful about the data sets which are collected, stored and/or shared.

Typically a network operator may wish to operate such that a minimal amount of user data is stored, that data still being sufficient to allow for the performance of useful complex analytics. It will be appreciated that analytic processes may be more efficiently carried out on smaller data sets, which can lead to an improvement in speed of analysis and a reduction in computing power required to perform such analysis. Furthermore, if sharing a datasets with outside analysts, network operators may be required to strip the data in said data set of all sensitive user information.

Aspects and embodiments recognise that a data set associated with web usage by an individual may comprise, for example, a list of truncated URLs. A "truncated URL" list may be such that each URL is trimmed to only contain a web domain. For instance: a HTTP URL: *finance.yahoo.com/q?s=BAC* may be truncated to *finance.yahoo.com* (to hide the fact that the user had queried for Bank of America Corp. stock price); the URL *https://www.google.com/\#q=postnanal+depression* may be truncated to *www.google.com* (to avoid leaking the sensitive health query of the user) and the URL *www.amazon.com/Dell-Inspiron-i15R-6-inch-Laptop/dp/B009US2BKA* maybe truncated to *www.amazon.com* (to avoid leaking the searched or purchased product). Many telecommunication network operators provide only truncated URLs to outside analysts.

In one embodiment, analysing of a plurality of inter-arrival times comprises: categorizing inter-arrival times determined in respect of the data points in the data stream associated with the user into one of a set of bins according to determined value; assessing a distribution of inter-arrival times within the bins to identify the personalised user inter-arrival time threshold. Accordingly, one example method may operate to divide inter-arrival time samples into bins of equal length, and then, starting from the smallest value, the logic provided at the first module may operate to find a decaying point, which may also represent a user-specific threshold, of the inter-arrival time density such that the extended probability by increasing decaying point is insignificant compared to the accumulated probability at that point. According to one implementation, the threshold is found when the contributions of J consecutive bins (for a pre-specified parameter J) are less than a predefined probability. All samples with inter-arrival time less than the obtained threshold may then be grouped into temporal bursts.

In some embodiments, a personalized inter-arrival time threshold is found by learning the activity patterns of each user. That threshold can be used to cluster temporal data points, for example, URL records, within a data stream.

In one embodiment, the method further comprises: determining a data point in each cluster representative of the action of the user within the IP based data network. A representative data point maybe considered to be that data point within, for example, a cluster of a URL stream, which represents intended user interaction, for example: a *mazon.com, google.com* and similar, as opposed to advertisements, web scripts, for example: *google-analytics.com, pagead2.googlesyndication.com, static.ak.facebook.com* and similar.

Aspects and embodiments recognise that, even if properly clustered into bursts or clusters, a simple approach of always using the first data point in a burst as the representative data point does not work well. The ordering of the data points within a stream may be scrambled due to network transmission delay, mixing effect of multiple-tab multiple-window web browsing and background network update etc. Even the approach of using a SVM classifier based on directly observed features such as inter-arrival time, upload and download size, may only result in a 60% accuracy in identifying the representative domains. Inference of users' activities and users' behavioral patterns based on such inaccurate representative domains is likely to be extremely erroneous and may therefore be unusable for most real applications.

Further burst or cluster analysis can be based on an assumption that each burst or cluster (found by implementing the user specific inter-arrival time threshold to break a data stream into clusters) corresponds to a discrete user activity and therefore it is likely that one data point in that burst is representative of that discrete user activity.

In one embodiment, determining a data point in each cluster representative of the action of the user within the IP based data network comprises: determining at least one characteristic of the cluster; comparing the at least one characteristic of the cluster with a classification of the characteristic based on a classification of the characteristic across historic clusters identified in at least one data stream associated with a user of the IP based data network. That classification of a characteristic may comprise logistic regression or an alternative standard classifier, for example, an appropriate support vector machine.

Aspects and embodiments recognise that an automated classifier may operate to assist in a user profiling system to identify representative domains. In particular, embodiments recognise that identification of a representative domain within a URL burst may depend upon the set of features that are used by the domain classifier.

According to some aspects and embodiments, the classifier maybe operable to identify a representative domain by processing or analysing features extracted from the burst detection step. Those burst features may comprise, for example: URL ordering within a burst, number of unique URLs within a burst, burst duration, burst inter-arrival time, burst size and similar.

In one embodiment, the classification of the characteristic of the cluster across historic clusters is performed across clusters identified in a plurality of data streams associated with a plurality of users of the IP based data network. Accordingly, by using all data available within a network, rather than just single user data, it is more likely that a system will achieve reliable detection and identification of "representative" URLs or data points within a cluster.

In one embodiment, the at least one characteristic of the cluster comprises: one or more of: data point order within the cluster; number of unique data point identifiers within the cluster; cluster duration; cluster inter-arrival time; and cluster size.

In one embodiment, determining a data point in each cluster representative of the action of the user within the IP based data network comprises: determining at least one characteristic of each data point in the cluster; comparing the at least one characteristic of the data point with a classification of the characteristic based on a classification of the data point characteristic across historic data points.

The classifier may be operable to identify representative domains by processing or analysing other factors, including, for example: directly observed URL features such as download size, upload size, leading and next inter-arrival time. Some aspects and embodiments recognise that the use of one or more burst features may improve the accuracy of a representative domain classification method and, for example, may enable a classification method to overcome some of a possible loss in accuracy owing to URL truncation. In one embodiment, the at least one characteristic of the data point comprises: one or more of: leading inter-arrival time of the data point; following inter-arrival time of the data point; download size associated with the data point; upload size associated with the data point.

In one embodiment, the method comprises: performing real-time characterisation of user behaviour in relation to a data stream associated with a user, based on a previously determined personalised user inter-arrival threshold and a previously performed classification of a cluster characteristic and data point characteristic.

In one embodiment, performing real-time characterisation of user behaviour comprises: extracting an identifier and an indication of arrival time associated with each data point in a streamed data stream; using the determined personalised user inter-arrival threshold to group the data points in the streamed data stream into one or more clusters, each cluster of data points representing an action of the user within the IP based data network; and determining a data point in each cluster representative of the action of the user within the IP based data network, based on a classification of a cluster characteristic performed across historic clusters identified in at least one data stream associated with a user of the IP based data network.

In one embodiment, performing real-time characterisation of user behaviour comprises: extracting an identifier and an indication of arrival time associated with each data point in a streamed data stream; using the determined personalised user inter-arrival threshold to group the data points in the streamed data stream into one or more clusters, each cluster of data points representing an action of the user within the IP based data network; and determining a data point in each cluster representative of the action of the user within the IP based data network, based on a classification of a data point characteristic performed across historic data points identified in at least one data stream associated with a user of the IP based data network.

In one embodiment, the data point in each cluster representative of the action of the user within the IP based data network is mapped to a category of user activity within the network. Accordingly, the method may operate to map representative URLs or other data point identifiers to to activity categories. For instance, Amazon can be mapped to shopping, Google to searching, YouTube to streaming video/ audio and Facebook to social networking. That activity mapping can be prepared in advance by crawling representative URLs extracted by classification techniques or by using website statistics service such as similarweb.com. Thus, a series of identified representative URLs or data point identifiers can be mapped into a series of activities for each user, which in turn can be used to build a user profile.

A second aspect provides a computer program product operable, when executed on a computer, to perform the method of the first aspect.

A third aspect provides a device operable to characterise user behaviour in an IP based data network, based on a data stream comprising an indication of IP traffic associated with a user; the device comprising: reception logic operable to receive an identifier and an indication of arrival time associated with a data point in the data stream; determination logic operable to determine an inter-arrival time between adjacent data points in the data stream; analysis logic operable to analyse a plurality of inter-arrival times in the data stream associated with the user to determine a personalised user inter-arrival time threshold; and cluster logic operable to use the determined personalised user inter-arrival threshold to group the data points in the data stream into one or more clusters, each cluster of data points representing an action of the user within the IP based data network.

In one embodiment, the identifier associated with a data point comprises: at least one of: a URL, a truncated URL, or an IP address.

In one embodiment, the analysis logic is operable to analyse a plurality of inter-arrival times by: categorizing inter-arrival times determined in respect of the data points in the data stream associated with the user into one of a set of bins according to determined value; assessing a distribution of inter-arrival times within the bins to identify the personalised user inter-arrival time threshold.

In one embodiment, the device further comprises: representative data point logic operable to determine a data point in each cluster representative of the action of the user within the IP based data network.

In one embodiment, the representative data point logic is operable to determine a data point in each cluster representative of the action of the user within the IP based data network operates to: determine at least one characteristic of the cluster; compare the at least one characteristic of the cluster with a classification of the characteristic based on a classification of the characteristic across historic clusters identified in at least one data stream associated with a user of the IP based data network.

In one embodiment, the classification of the characteristic of the cluster across historic clusters is performed across clusters identified in a plurality of data streams associated with a plurality of users of the IP based data network.

In one embodiment, the at least one characteristic of the cluster comprises: one or more of: data point order within the cluster; number of unique data point identifiers within the cluster; cluster duration; cluster inter-arrival time; and cluster size.

In one embodiment, the representative data point logic is operable to determine a data point in each cluster representative of the action of the user within the IP based data network by: determining at least one characteristic of each data point in the cluster; comparing the at least one characteristic of the data point with a classification of the characteristic based on a classification of the data point characteristic across historic data points.

In one embodiment, the at least one characteristic of the data point comprises: one or more of: leading inter-arrival time of the data point; following inter-arrival time of the data point; download size associated with the data point; upload size associated with the data point.

In one embodiment, the device comprises: streaming logic operable to perform real-time characterisation of user behaviour in relation to a data stream associated with a user, based on a previously determined personalised user inter-arrival threshold and a previously performed classification of a cluster characteristic and data point characteristic.

In one embodiment, the streaming logic operable to perform real-time characterisation of user behaviour by: extracting an identifier and an indication of arrival time associated with each data point in a streamed data stream; using the determined personalised user inter-arrival threshold to group the data points in the streamed data stream into one or more clusters, each cluster of data points representing an action of the user within the IP based data network; and determining a data point in each cluster representative of the action of the user within the IP based data network, based on a classification of a cluster characteristic performed across historic clusters identified in at least one data stream associated with a user of the IP based data network.

In one embodiment, the streaming logic is operable to perform real-time characterisation of user behaviour by: extracting an identifier and an indication of arrival time associated with each data point in a streamed data stream; using the determined personalised user inter-arrival threshold to group the data points in the streamed data stream into one or more clusters, each cluster of data points representing an action of the user within the IP based data network; and determining a data point in each cluster representative of the action of the user within the IP based data network, based on a classification of a data point characteristic performed across historic data points identified in at least one data stream associated with a user of the IP based data network.

In one embodiment, the data point in each cluster representative of the action of the user within the IP based data network is mapped to a category of user activity within the network.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates schematically a data extraction environment;
Figure 2 illustrates schematically some components of a user behaviour analysis system;
Figure 3 shows schematically two examples of a personalised inter-arrival time threshold;
Figures 4a and 4b illustrate schematically indicative performance of a representative domain classification scheme;
Figure 5 illustrates schematically a possible user profile based on collected data;
Figure 6 illustrates schematically a user behaviour analysis system with a location system;

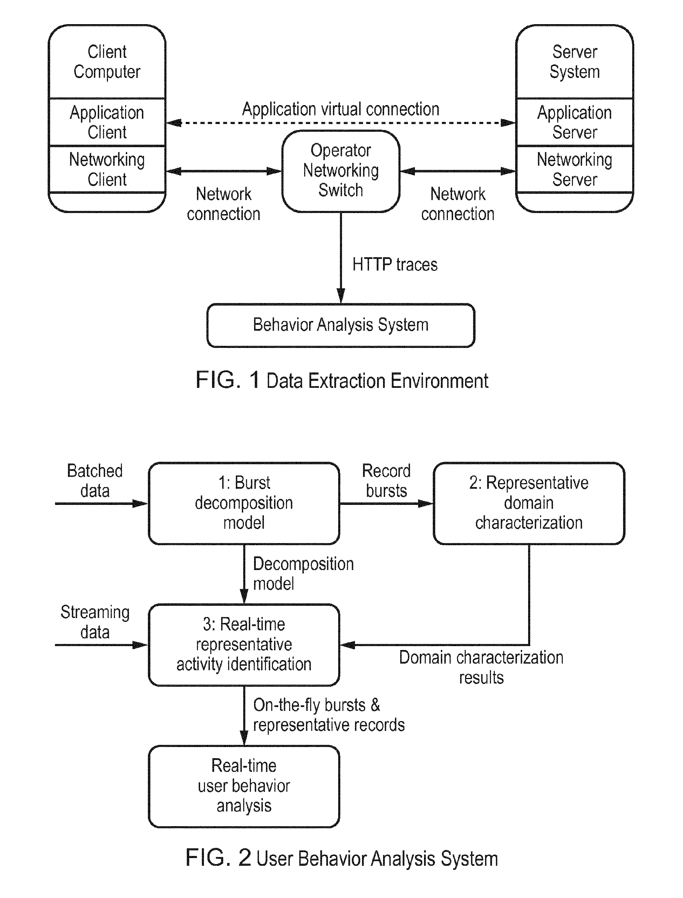

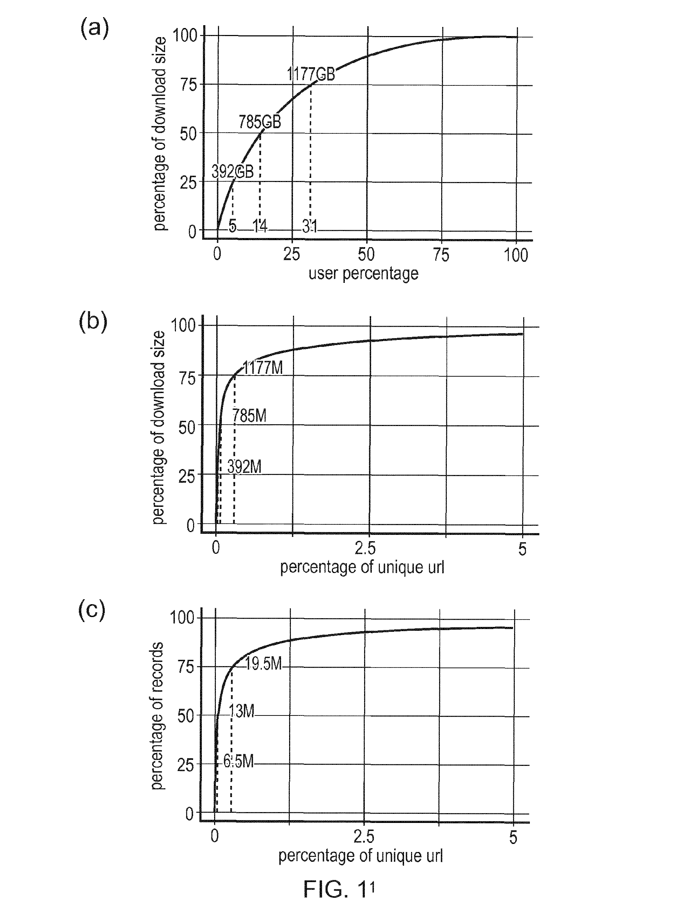

Figures 1a[1] to 1[1]c: Summary statistics for a 2000-user batch of the web log data;

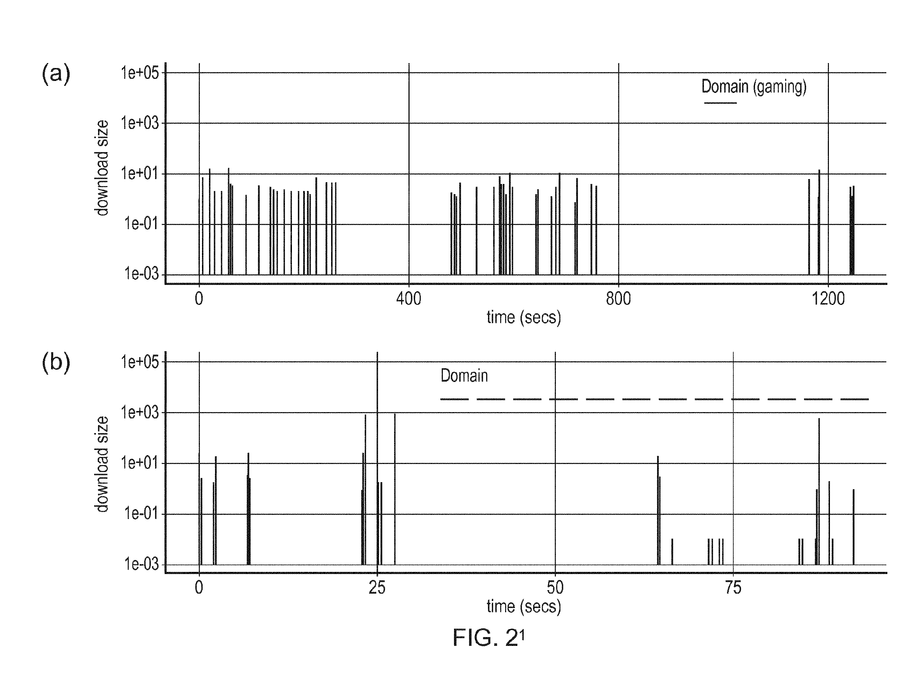

Figures 2[1]a to 2[1]b: Snapshot of timestamped HTTP records with download size for two users, showing a significant variation in amount of non-representative traffic. Different coloured segments represent traffic of different domains which can be either representative or non-representative. Note that the trace of the first user has only one domain (gaming) and in fact, repeated records from a single URL for more than 1300 seconds, while the second user alternates between a large number of domains (scripts, multimedia, HTML CSS etc.) in less than 100 seconds, even though she is browsing a single web-page during this time;

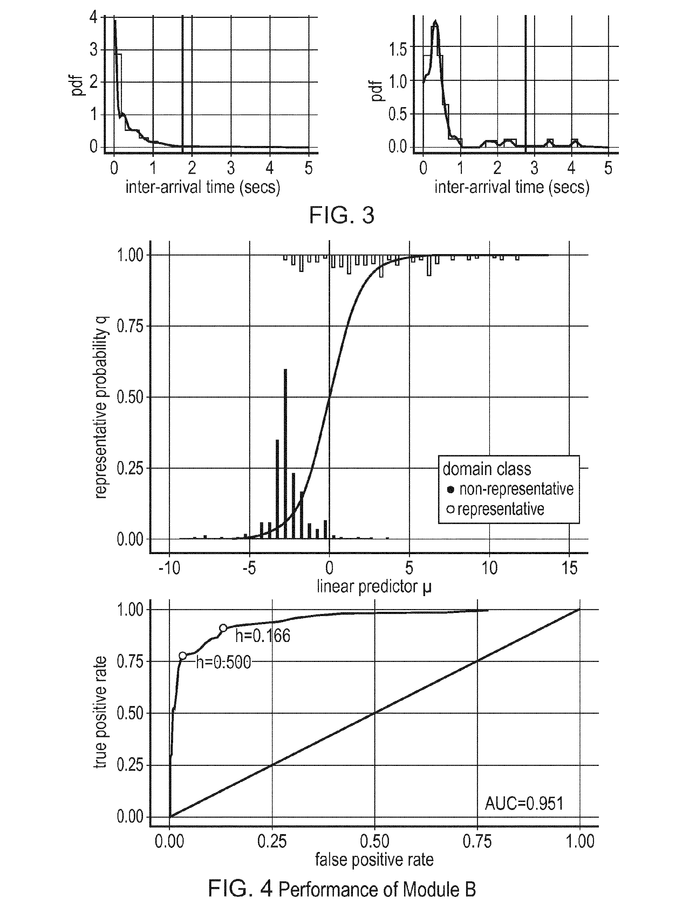

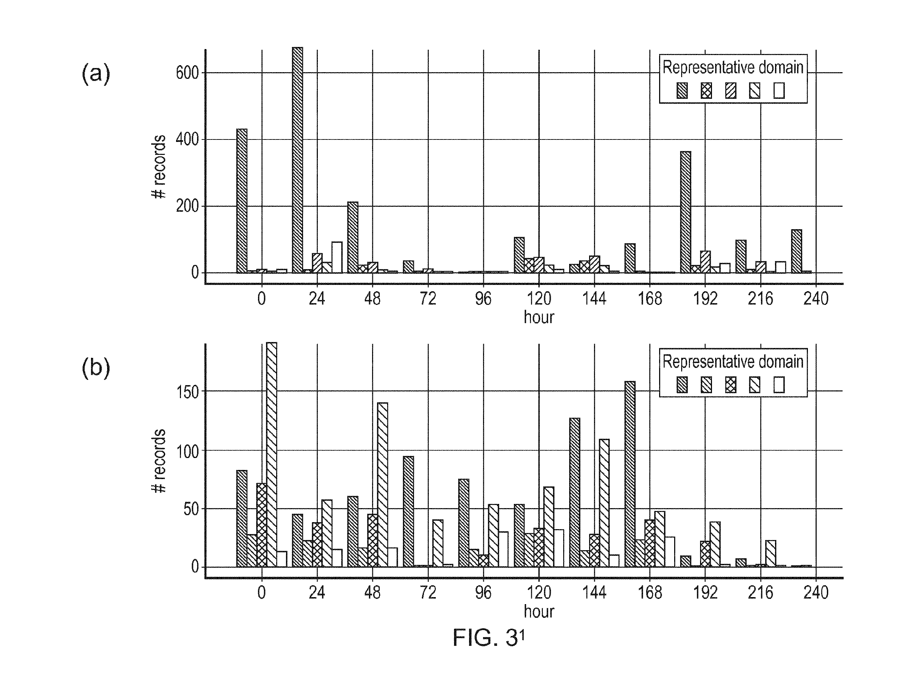

Figures 3[1]a to 3[1]b: Daily record count of top 5 user activities for two users; different coloured bars represent different user activities such as reading, search, gaming. This plot shows a strong temporal activity variation of each user and also a variation across users' activities;

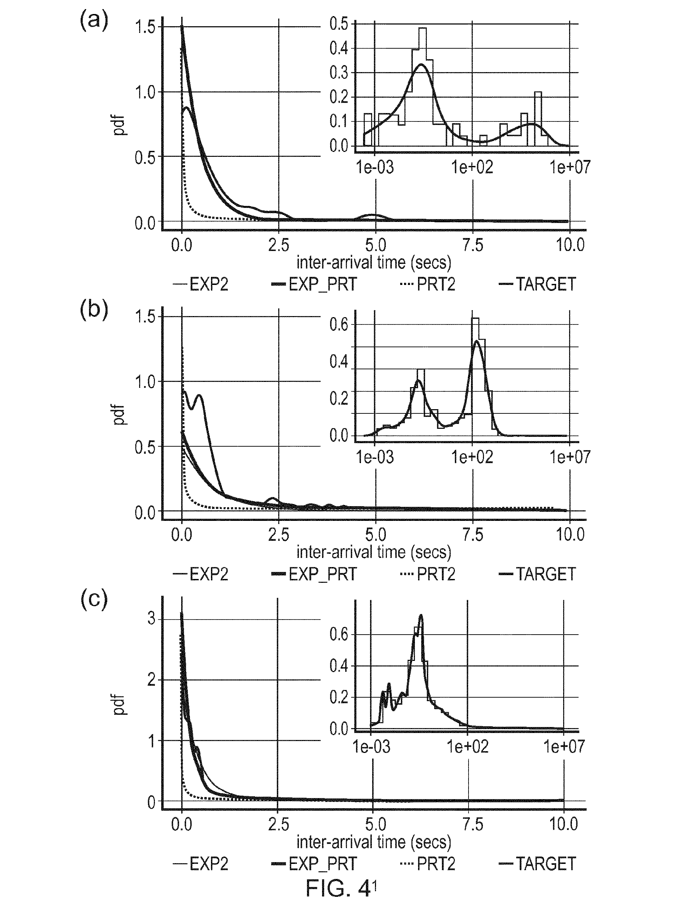

Figures 4[1]a to 4[1]c: This figure presents the inter-arrival density approximation with inner log scale density plots. The target curve is plotted in red;

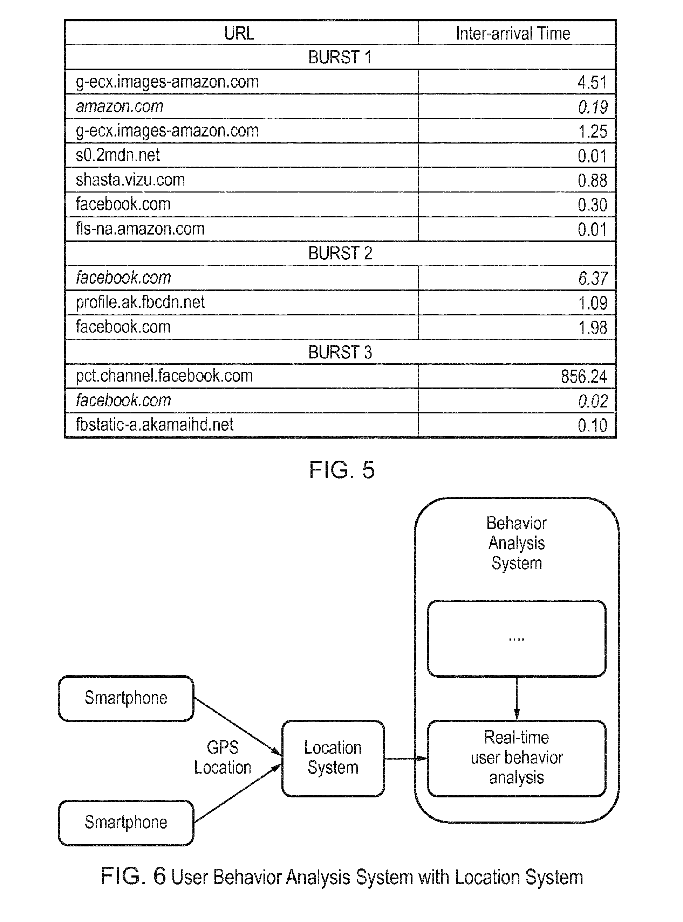

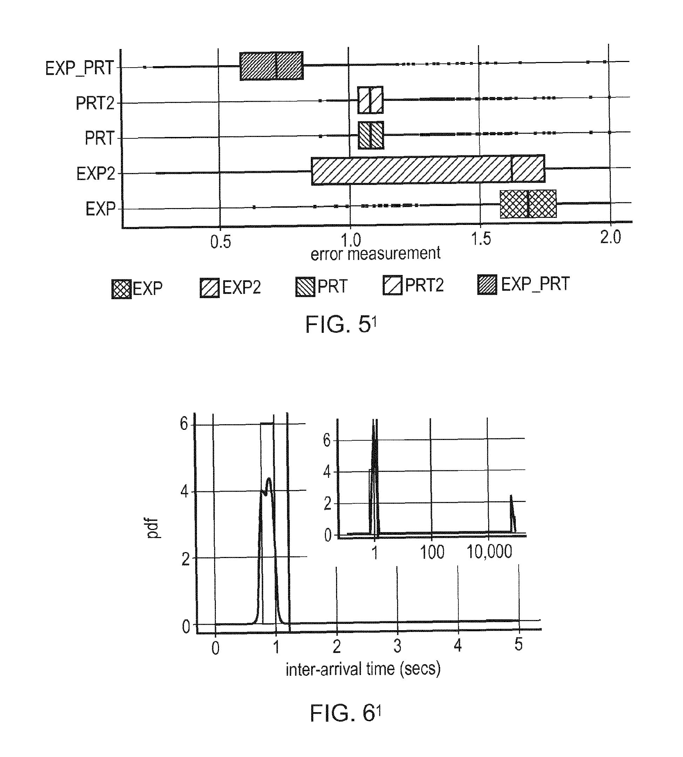

Figure 5[1]: Density approximation errors of different methods;
Figure 6[1]: Inter-arrival density approximation with an inner log scale density plot for an unusual user profile. The blue threshold is obtained by Item 5;

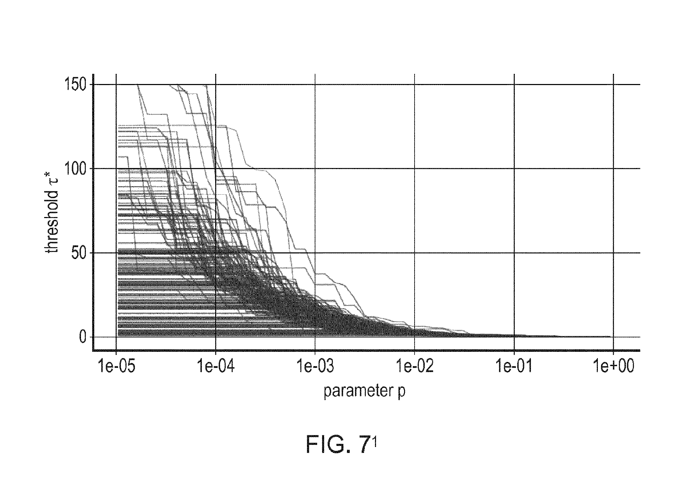

Figure 7[1]: Inter-arrival time threshold and the value of the parameter $p$;

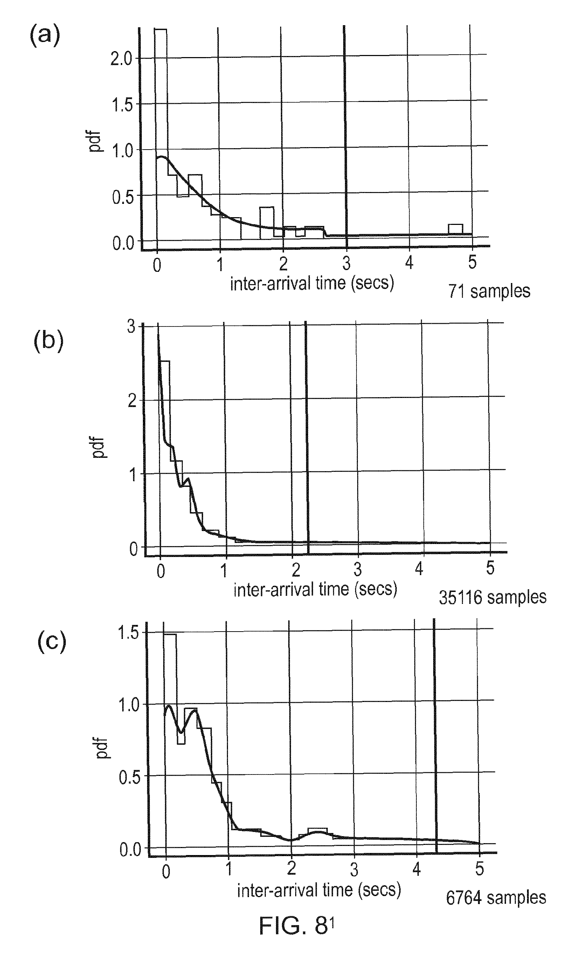

Figure 8[1]: Inter-arrival time thresholds obtained from burst detection algorithm;

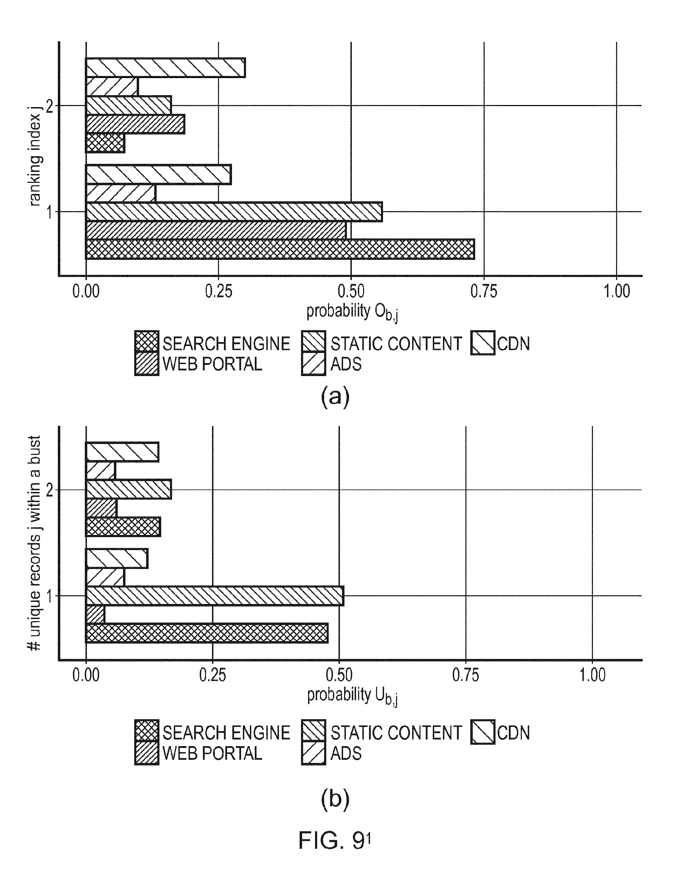

Figures 9[1]a to 9[1]b: Burst measurements $o_{bj}$ and $u_{bj}$ ($j = 1 : 2$);

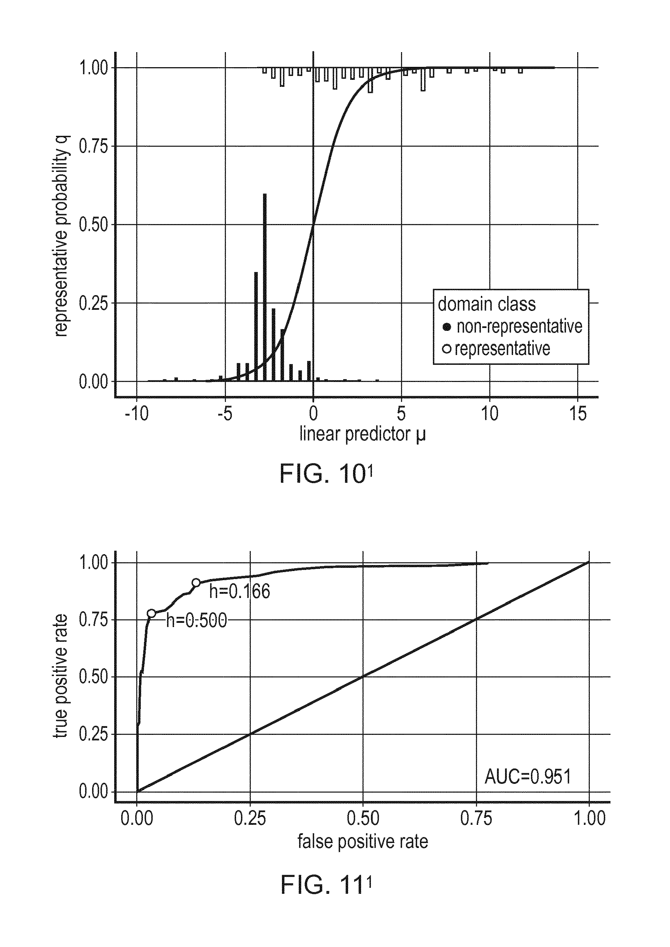

Figure 10[1]: Logistic curve of the predictor and the histograms of labelled observations; and
Figure 11[1]: Receiver operating characteristic curve.

DESCRIPTION OF THE EMBODIMENTS

As described above, given a truncated URL dataset (to prevent privacy leak of individual users), it may be desirable to perform a medium-grained (shopping, searching, reading, gaming etc.) behavioural analysis of individual users. In order to achieve this aspects recognise that it may be beneficial to classify the noisy (and truncated) URL trace into URLs which represent user activity and URLs which do not. In addition, it may be beneficial to form a user profile which allows for the decomposition of a user's live traffic stream into activity "bursts".

Dealing with truncated URLs is hard because truncation strips the URL of the file suffix (.mp3, .jpg, .js) and other parameters that can be very useful when performing URL classification. It would be typical for a user activity stream to be such that analysis is performed in relation to limited data: neither packet content, nor a full URL is typically available. Furthermore, users within a network do not all operate similarly. It is recognised that there can be extreme variation in the traffic profiles of different users.

Described aspects and embodiments maybe used in relation to truncated URLs. Use of truncated URLs provides a constraint in a system and makes user profiling harder, but they represent one way in which user privacy may be preserved. The fact that behavioural analysis can be performed with limited information from truncated URLs can be viewed as a key feature of systems in accordance with aspects and embodiments.

Some features of aspects and embodiments may include:

Use of features related to URL bursts to achieve high accuracy in identifying URLs which represent user activity. This may involve determining the best features to be extracted from a burst for the classification.

Automatic, robust burst decomposition which can work well across a wide spectrum of user traffic profiles.

Activity characterization (behavioural analysis) of a user from a trace on-the-fly (i.e., in a streaming setting). That characterisation may be based on user-adaptive thresholds (digital profile) calculated during burst decomposition and URLs identified as representative domains.

Before discussing the embodiments in any more detail, first an overview will be provided.

Aspects and embodiments described may be combined to provide a system which can be configured to provide an accurate medium-grain user behaviour analysis. That analysis may, for example, be based on truncated URL traffic traces associated with a user.

Figure 1 illustrates schematically a data extraction environment. User URL traffic traces may be extracted from an HTTP communication stream. The full URL traffic trace may be truncated. That truncated URL traffic trace can fed into the pipeline processing system, as shown schematically in FIGURE 1.

According to one arrangement, parameters of the traffic trace used for analysis comprises a series of pairs *<truncated hostname, arrival time>*. Additional information, for example, download size, upload size and similar, may help to improve precision of the various machine learning techniques used in accordance with traffic trace analysis methods in accordance with aspects and embodiments.

It will, of course, be appreciated that if a user traffic trace includes HTTPS traces, hostnames maybe replaced by appropriate TCP/IP addresses.

Figure 2 illustrates schematically some components of a user behaviour analysis system. The system shown schematically in figure 2 comprises generally three modules. The output of the system shown may be passed to a dedicated user behaviour module for further analysis.

## Module 1: Burst decomposition

A module maybe provided to perform burst decomposition in relation to a user traffic trace. A module may be provided which is operable to decompose a stream of URLs into clusters that correspond to user micro-actions such as: web clicks, chat replies, etc. The decomposition of the stream into "chunks" may be based on timing characteristics of the URLs forming the stream. The chunks or "clusters" of URLs, thus identified, are referred to herein as a "URL burst".

The decomposition of a URL trace into bursts can be achieved by using user-adaptive thresholds. For example, in a traffic trace associated with a user X, if two HTTP records have a gap of less than a threshold for that user, they may be classified as belonging to the same burst. Otherwise, the later HTTP record may be considered to be an HTTP record which is first in a new burst.

Aspects and embodiments recognise that an analysis which is based on adapting a burst threshold to match an individual user based on their activity patterns can have advantages compared to trying to implement a global threshold for all users. Aspects and embodiments may recognise that the distribution of inter-arrival times of HTTP records may vary significantly depending on the activity being pursued by a user. For instance, gaming applications regularly exchange the data with the servers, while in reading a book online, most of the data can be cached at the user side and the network traffic can be infrequent.

In some embodiments, it may be possible to determine an initial user-adaptive threshold in relation to inter-arrival time by means of a probabilistic analysis which uses a historic individual user traffic trace and in particular, the distribution of the inter-arrival time of the HTTP records.

Accurately breaking a user trace into bursts is significant, since further analysis may be based on an assumption that each burst corresponds to a discrete user activity and therefore it is likely that one URL domain in that burst may be representative of that discrete user activity. Errors made when implementing burst decomposition in relation to a user stream may result in erroneous identification of a user activity pattern.

As shown schematically in FIGURE 2, the results of a burst decomposition process may be used by module 2. Module 2 may be operable to identify a representative domain in each identified URL burst. That is to say, the batched URL trace can be processed by module 2 to give a representative domain for each burst.

Similarly, some aspects recognise that the results of a burst decomposition process may be used by module 3 for characterizing a user-activity pattern in a real-time setting.

## Module 2. Representative domain characterization:

Module 2 of the system shown schematically in Figure 2 may be operable to identify representative domains of a batched user data stream. A representative domain maybe considered to be those domains within, for example, a URL stream, which represent intended user interaction, for example: *amazon.com, google.com* and similar, as opposed to advertisements, web scripts, for example: *google-analytics.com, pagead2.googlesyndication.com, static.ak.facebook.com* and similar.

Aspects and embodiments recognise that, even if properly clustered into bursts, a simple approach of always using the first URL in a burst as the representative URL does not work well. The ordering of the URLs within a stream may be scrambled due to network transmission delay, mixing effect of multiple-tab multiple-window web browsing and background network update etc. Even the approach of using a SVM classifier based on directly observed features such as inter-arrival time, upload and download size, may only result in a 60% accuracy in identifying the representative domains. Inference of users' activities and users' behavioral patterns based on such inaccurate representative domains is likely to be extremely erroneous and will therefore be unusable for most real applications.

In some embodiments, an offline supervised classifier is provided which is operable to automatically filter out representative domains from the overall network trace. Such an automated classifier may remove the need for manual blacklisting of URL domains. An automated solution may efficiently deal with emerging hostnames over time and local webpages and portals in different languages.

Aspects and embodiments recognise that an automated classifier may operate to assist in a user profiling system to identify representative domains. In particular, embodiments recognise that identification of a representative domain within a URL burst may depend upon the set of features that are used by the domain classifier. According to some aspects and embodiments, the classifier maybe operable to identify a representative domain by processing or analysing features extracted from the burst detection step. Those burst features may comprise, for example: URL ordering within a burst, number of unique URLs within a burst, burst duration, burst inter-arrival time, burst size and similar. The classifier may be operable to identify representative domains by processing or analysing other factors, including, for example: directly observed URL features such as download size, upload size, leading and next inter-arrival time. Some aspects and embodiments recognise that the use of one or more burst features may improve the accuracy of a representative domain classification method and, for example, may enable a classification method to overcome some of a possible loss in accuracy owing to URL truncation.

As shown in FIGURE 2, the results of this domain characterization module maybe used by module 3 to identify the user activity patterns.

**Module 3 - Identification of representative user activity in real-time:**

According to some systems, a module may be provided which is operable to combine the output from modules 1 and 2. Such a combination may be operable to identify user activities in real-time.

Aspects and embodiments may allow for a module operable to use personalized user thresholds identified by a burst detection module to decompose a user's network trace into bursts on-the-fly. Such a module may be further operable to build a supervised classifier operable to determine a unique representative domain for each identified URL burst. That classifier may be operable to utilise, for example: those record-level features and associated temporal information which can be extracted in a streaming setting; aggregated burst features; and whether or not a URL is marked representative or non-representative by the classifier in the domain characterization module.

The streaming classifier may, in some embodiments, be operable to handle an instance where there are no representative URLs for a recorded burst. That burst may, for example, comprise: an application update burst or a pop-up advertisement burst.

According to one example implementation a system such as that shown schematically in FIGURE 2 may be used to construct a user activity profile. Once such a profile has been created, questions such as "how much time a specific user spends for shopping?", "what is the activity pattern of a user on Monday?" may be answered.

Operation of each of the modules is described in more detail below:

Module 1 may be operable to use a probability-based algorithm to produce personalized thresholds of inter-arrival time, which can be used to separate URL records relating to different micro-actions. Such thresholds may be automatically calculated for each user as follows, adapting to his or her activity pattern:

One example first module may operate to divide inter-arrival time samples into bins of equal length, and then, starting from the smallest value, the logic provided at the first module may operate to find a decaying point, which is also the threshold, of the inter-arrival time density such that the extended probability by increasing decaying point is insignificant compared to the accumulated probability at that point. According to one implementation, the threshold is found when the contributions of J consecutive bins (for a pre-specified parameter J) are less than a predefined probability. All samples with inter-arrival time less than the obtained threshold may then be grouped into temporal bursts.

Two thresholds with inter-arrival time density functions for two users are plotted in FIGURE 3. Figure 3 illustrates schematically that a system may automatically calculate personalized inter-arrival time thresholds (shown by vertical lines) by learning the activity patterns of each user. That threshold can be used to cluster temporal URL records.

Module 2 maybe implemented using a classification. In some embodiments, that classification may use features derived from directly observed information (for example, leading and next inter-arrival times, download size, upload size and/or similar) and features inferred from burst decomposition (for example, URL orderings within bursts, number of unique URLs within bursts, burst duration, burst inter-arrival time, burst size) of all users to select representative URLs in a batched setting. Module 2 may also perform a model selection procedure, based on Akaike Information Criterion, to select the most suitable features for the "representativeness" classification problem. The performance of such a classifier is shown with the logistic curve and the receiver operating characteristic curve in FIGURE 4.

It will be appreciated that assessment of the characteristics of a particular domain/URL (*amazon.com, google.com, google-analytics.com*) globally among all user traces may allow a batched supervised classifier module to operate to label representative URLs with high precision.

FIGURE 4 illustrates schematically the performance of one possible second module. Figure 4a illustrates a Logistic Curve: The system correctly identifies representative URLs (true positive: being shown as an upper red histogram portion on the right hand side of the vertical line) and non-representative URLs (true negative: a lower green histogram portion on the left hand side of the vertical line). Figure 4b illustrates schematically a trade-off between true positive rate and false positive rate. It will be appreciated that a high AUC (Area Under the Curve) is indicative of a good classifier. The plot shows two representative probability thresholds, which can be used to separate representative and non-representative URLs.

One implementation of module 3 maybe operable to use the burst decomposition model resulting from module 1 to cluster temporal URL records in real-time. Module 3 may be provided with both: batched global knowledge (representative or non-representative label, average inter-arrival time, average order within-burst, and all other features derived from the batched analysis of module 2) and real-time temporal information (for example: how many bursts that an URL has appeared in the last 10 minute, orderings of a URL in previous bursts, download and upload size in the last 10 minute). Furthermore, module 3 may be arranged to use a statistical classifier operable to select representative URLs for streamed HTTP traffic records. Automated model selection is performed in a similar way to that described in relation to the classification process of module 2.

FIGURE 5 illustrates schematically an example output of the real-time module 3. A real time system performed by module 3 may be robust since characterization of a URL depends on both global information and real-time local information.

FIGURE 5 shows an example set of output results of module 3. Consecutive truncated URLs are grouped to bursts for each user micro action (web click, chat reply), based on a probability-based algorithm. For each burst, a real-time classifier is operable to select a URL, shown in italics, which represents a user activity. In the first burst of the example shown, a user is browsing amazon. Since some embedded facebook comments are included in the website, the facebook URLs are grouped together in the amazon burst. However, the representative URL is for this action remains amazon.com. In the second burst, the user starts a thread on facebook. Even though the user is inactive for a while, a facebook long poll HTTP is still updated in the background, as shown in burst 3.

In one embodiment, a Real-time User Behavior Analysis module (module 3) may operate to map representative URLs to activity categories. For instance, Amazon can be mapped to shopping, Google to searching, Youtube to streaming video/audio and Facebook to social networking. That mapping can be prepared in advance by crawling representative URLs extracted in module 2 or by using website statistics service such as similarweb.com. Thus, a series of identified representative URLs can be mapped into a series of activities for each user, which in turn builds up a user profile.

Some implementations can be extended such that they can analyse combined traffic comprising URLs which are HTTP and/or HTTPS. HTTPS traffic is such that it is usually only possible to see the IP address of the URL, i.e. URLs are extremely truncated in that it is merely the IP address of the URL that is identified. In one embodiment, HTTP traffic can be used in the training steps of the described three modules and the trained models can be used to realise representative IP addresses of HTTPS traffic.

A basic system in accordance with described aspects and embodiments can be extended to analyse general TCP-IP traffic. Such implementations may increase the analysis coverage of user activity and may enable user activity profiling and prediction in both coarse-grained activities (chatting, p2p) and medium-grained HTTP/HTTPS activities (shopping, reading, searching). Some embodiments may include a filter module operable to separate traffic types based on packet types (TCP/UDP/IP) or TCP ports and then use one subsystem similar to that shown in FIGURE 1 in relation to each traffic type. However, such an embodiment may require some additional information from an operator in relation to the traffic. That additional information may, for example, comprise: an indication of one or more of: TCP port, IP address, connection ID, connection time and similar.

Some embodiments may combine user activities with location information to provide a more complete user behaviour analysis. One example user profiling including location information is shown schematically in FIGURE 6. Such embodiments may, for example, allow prediction of user behaviour in such as: considering a user has been reading on Sunday morning at home, what might that user do in the next hour or in the afternoon according to their profile? Alternatively: what online activities does a user perform when abroad or in a city centre? Such embodiments may be reduced to practice by providing a predictor in, for example, a Real-time User Behavior Analysis module, based on the identified user activities, time and location information.

In one application of a system in accordance with aspects and embodiments, a system can be used to filter advertisements, pop-up and web analytics. In this case, instead of using activity-representative classifiers in modules 2 and 3, classifiers can be used to identify advertisement or web analytics records within bursts.

In one embodiment of a system in accordance with aspects and embodiments, a system can be applied in a cloud environment, where users may communicate with third-party applications. A cloud provider may not be able to access communicated content because messages between users and cloud applications may be encrypted or have special formats, or because of privacy constraints. In this context, a system can be used to chain cloud requests (one processing request accompanied by several data storage requests), analyse user cloud usage by main requests of request chains, predict cloud dynamic load and provide a smart load balancing.

Aspects and embodiments described may provide a general system and framework to infer user activities by examining truncated operator-side network traffic. It may be used to improve a network operator's capability to analyze medium-grain user behavior, while complying with user privacy constraints.

A system in accordance with aspects and embodiments may provide some capability to analyse user behavior to network operators. Those network operators may, for example, not typically have control over either client-side or server-side applications. A system in accordance with aspects and embodiments may provide some capability to analyse medium-grain user behavior patterns, given an input of limited truncated data under the constraint of user privacy. A system in accordance with aspects and embodiments may provide some capability to provide analysis which is personalized and tailored for each user, capturing the variation of user behavior patterns.

A system in accordance with aspects and embodiments may provide activity characterization which is robust to analysis error owing to the combination of global offline and local online processes. Thus, the system is expected to work well not only with URLs in the current traces but also with the traces of new and emerging URLs by leveraging user activity patterns (for example, it may be operable to filter out new advertisement URLs). The system may serve as a foundation framework for providing complex personalized solutions (for example, targeted services, data, promotions, coupons, services, offers, and similar) whilsy ensuring that privacy considerations are properly met (no leaking of fine-grained user traits, specific queries, since those are neither shared, nor stored).

Systems including methods in accordance with described aspects and embodiments may be useful for optimizing network resources by developing an understanding of the users behaviour. Such a behavioural analysis can also be useful for a service-provider to upscale/downscale its cloud resources. Furthermore systems encompassing aspects and embodiments can be an important tool in operator-side traffic analysis allowing for quick detection of the users making improper use of the network resources, or for network fault diagnosis.

The system maybe deployed for use on the most basic information from operator-side data and includes abstract functionality modules. It may be possible to construct more specific solutions with extra information from the operators.

**Identifying user activity from truncated-URL web traces**

Tiep Mai Deepak Ajwani Alessandra Sala Alcatel-Lucent Bell Labs, Ireland {firstname.lastname}@alcatel-lucent.com

**ABSTRACT**

Understanding user behavior is essential to personalize and enrich a user's online experience. While there are significant benefits to be accrued from the pursuit of personalized services based on a fine-grained behavioural analysis, care must be taken to address user privacy concerns. The ideal data set used for such an analysis should not reveal any sensitive user information, while still maintaining necessary information for inferring user activities (such as reading, social networking, gaming, searching etc.). in this paper, we consider the use of web traces with truncated URLs-each URL is trimmed to only contain the web domain - for this purpose. While such truncation removes the fine-grained sensitive information (e.g., search query, purchased products, location etc.), we show that this data set is still good enough to identify user activities with high accuracy.

Specifically, we focus on the problem of finding representative URLs from the truncated-URL web traces that will characterize and identify user activities. Achieving a high accuracy for this problem is a challenging goal because truncation limits our ability to determine the content of the file using file name suffix and furthermore, it strips the web-trace of a lot of other potentially discriminatory features such as the number, type and value of parameters in the URL string. We propose a statistical methodology that is able to offset the accuracy loss due to truncation by leveraging specialized features extracted from a data burst (where a burst is defined as a group of consecutive URLs that represent a micro user action like web click, chat reply, etc.). these bursts, in turn, are detected by a novel algorithm which is based on our observed characteristics of the inter-arrival time of HTTP records.

**1. INTRODUCTION**

Behavioral analysis of users based on their web activities has the potential to transform their online experience to a new level. Such behavioural analysis enables service providers to personalize the content for the user, suggest recommendations and better target their products. Also, behavioural analysis is important for network service providers to monitor network activities, predict future load and provision their resources based on user profiles to ensure satisfaction across the entire user spectrum.

However, behavioural analysis also raises serious concerns about user privacy. Users are uncomfortable if personalization is taken too far. In the wider philosophical debate between personalized services based on user behaviour analysis and preserving the user privacy, there is a need to find a middle path that will allow for potential benefits of personalized services and still safeguard the fine-grained sensitive user information such as specific search queries, personal entertainment preferences, purchased products, location etc. in particular, the data set used for behavioural analysis has to be carefully determined.

Ideally, the data set for such analyses should be stripped of all sensitive user information, while still allowing for inference of medium-grained user activity. This is becoming even more important in the context of increasingly tightening privacy legislations in various countries which has made the operators more careful about the data sets they collect, store and share. The operators would like to store the minimal amount of data to still be able to perform complex analytics, raising the important question of determining the thin boundary between the required data for necessary analytics and the data that can enable mining of highly sensitive fine-grained user traits. In this context, we consider the usage of truncated URLs, wherein each URL is trimmed to only contain the web domain. For instance, the HTTP URL *finance.yahoo.com/q?s=BAC* is truncated to *finance.yahoo.com* (to hide the fact that the user had queried for Bank of America Corp. stock price), the URL *https://www.google.com/#q=postnatal+depression* is truncated to *www.gooyle.com* (to avoid leaking the sensitive health query of the user) and the URL *www.amazon.com/Dell-Inspiron-i15R-15-6-inch-Laptop/dp/B009US2BKA* is truncated to *www.amazon.com* (to avoid leaking the searched or purchased product). Clearly, the process of truncation strips the data of the more sensitive user information. The question that we address in this paper is whether we can still use a truncated-URL web trace to mine for medium-grained user activity identification.

It should be noted that not all the trace is composed of popular sites that are easy-to-classify as representative of a user activity or non-representative. In reality, the web-traces contain a very large number of different HTTP URLs in different languages from different countries that may have very local characteristics. For instance, in our study with the mobile web-traces of randomly sampled 2000 users for a month, we found that it contained more than 83,000 unique truncated URLs. Even maintaining a manually annotated list of spam sites, adult content, advertisements and analytics is a tedious, expensive and error-prone process. Our problem of filtering out URLs that do not represent user activities is even harder, as non-representative URLs not only include unintentional traffic such as spam, analytics and advertisements, but also the images, audio clips, videos and scripts related to the intentional traffic. For instance, the URL *www.facebook.com* is enough to represent the activity of social networking and we need to filter out the related URLs for associated multimedia as they are not required for identifying the user activity. It is difficult to design a scalable system for identifying URLs representing user activities that is based on manual annotations. Thus, we focus on automated ways of classifying the HTTP URL trace into a list of URLs that represent user activity and a list of those that do not.

The truncation of the URLs limits the kind of features that we can use for identifying representative URLs. In particular, we can't use the file name suffix (e.g., .jpg, .mp$_3$, .mpg etc.) to determine the type of the content. We also can't use the number, type and values of parameters in the URL strings. This has a significant adverse impact on the accuracy and precision of the identified URLs and leads to large number of errors in identifying and characterizing the user activity.

In this paper, we show that even with the truncated URLs, we can achieve a highly accurate automated classification of web-domains into those that represent the user activity and those that don't. The key insight that we bring in this paper is that a user's traffic trace is composed of many data bursts. A burst usually corresponds to a micro user action like a web click, chat reply, etc. and is typically associated with a unique activity. We show that novel features related to burst measurements, such as positioning of a URL in a burst, the number of URLs in the burst containing the web-domain etc., can improve the accuracy of filtering the noise (unintentional traffic as well as other non-representative traffic) out of the traffic trace, by around 20%, offsetting the loss due to URL truncation.

A major challenge in achieving this result is to decompose a traffic trace of a user into its constituent data bursts. The problem here is that there is a significant variation in the traffic pattern across different users, at different timestamps and different activities. Even the distribution shape of the inter-arrival time of HTTP records differs significantly from one user to another. We resolve this problem by proposing a novel burst decomposition algorithm that adapts itself to any distribution shape, rather than relying on a specific distribution shape.

## 1.1 Contributions

Our main contribution in this paper is the development of a statistical model to filter out the URLs characterizing the user activity from the noisy truncated-URL web traces.

1. We study the distribution of inter-arrival time of HTTP records. This step can be of independent interest for other research directions (e.g., network simulation, traffic modelling etc.) as well.
2. We propose a novel algorithm to decompose a user's traffic trace into data bursts.
3. We build a highly accurate domain classification system using burst measurement features to identify a list of representative URLs filtering out the non-representative traffic.

We study a truncated-URL data traffic trace from a large mobile service provider for this purpose. This is a data trace of more than 10,000 users over a period of 30 days, consisting of more than 100 million HTTP records.

**Outline**

In Section 2, we show that there is a considerable variation in the user activity that necessitates the data-dependent feature extraction and complex statistical models to deal with this problem. Section 3 presents an overview of our methodology. In Section 4, we argue that there is a considerable variation in the distribution shapes of the inter-arrival time of HTTP records and thus, the burst decomposition techniques that rely on specific distribution shapes do not work well across the entire user spectrum. In Section 5, we show how we can remedy the situation by using a threshold on the inter-arrival time of HTTP records that adapts to the distribution profile of each user. Section 6 presents the results of domain classification using the features extracted from burst measurements. Section 7 presents an overview of some related work.

**2. VARIATION IN USER ACTIVITY**

In this section, we show that there is a significant variation between users in the amount of non-representative traffic, user activities, number of HTTP records etc. We then argue that this necessitates robust algorithms for extracting user-dependent features.

**Dataset**

Our dataset consists of the web logs of randomly selected 10,000 users for 30 days from an anonymous network operator. In the web logs, HTTP records of user activities are observed, containing information fields such as user hashed ID, URL, download size, upload size and timestamp. For user privacy, only the webserver name is recorded in each URL and the part of resource folder and name (containing more sensitive user information) is discarded/truncated.

**Variation in total traffic**

We first observe that there is a significant variation in the HTTP traffic generated by different users. For instance, the number of HTTP records ranges from low tens for some users to tens of thousands for other users, over the 30 day period of study. In fact, a majority of HTTP download traffic (75%) is generated by just 31% of user (Figure 1[1]a). We observe even more skewed distribution for the traffic in terms of the generating activity domain. Less than 0.5% of domains generate 75% of traffic in terms of download size (Figure 1[1]b) and HTTP record counts (Figure 1[1]c).

**Variation in non-representative traffic**

Even among the users with similar total traffic, the amount of non-representative traffic varies considerably between users. For instance, Figure 2[1] shows the web trace snapshot of two users, illustrating two different activity patterns. In Figure 2[1]a, when a user is playing games, only HTTP records of the gaming domain emerge and there is hardly any non-representative traffic. However, in a web browsing activity of Figure 2[1]b, both the activity representative records and the non-representative HTTP records show up (including secondary records of scripts, pictures, audio as well as unintentional traffic such as advertisements and analytics). This variation in activity patterns is reflected in download size, inter-arrival time as well as number of HTTP records. In addition, the timestamp patterns of HTTP records also varies significantly from one user to another (see Figure 2[1]).

**Variation in user activities**

We also observe that there is a significant variation between different users in terms of the activities themselves. Figure 3[1] shows the activity variation, within-user and across-user, at a coarser granularity, over time. For this figure, we filtered out the non-representative domains manually, selected top 5 representative domains for each user according to the number of HTTP records. Figure 3[1] presents the daily record counts for each representative domain and demonstrates both the temporal and user variations in activity magnitude. Furthermore, different users may share the same top activities, which are in the same color in Figures 3[1]a and 3[1]b, or have divergent activity preferences. To summarize the aggregated variation of the top k domains of both representative and non-representative traffic, we use the following global metric to measure the variation:

$$S_a = \frac{-\sum_i \frac{n_i}{nk} \log(\frac{n_i}{nk}) - \log(k)}{\log(nk) - \log(k)}$$

$$(1)$$

where $n_i$ is the number of times that URL $I$ appears in the top k domains, satisfying $\sum_i n_i$ = nk. By Equation (1), the variation metric $S_a$ is maximized at 1 when all users have different non-overlapping top $k$ domain set and is minimized at o when all users have the same non-ordered top k domain set. For the web trace data, $S_a$ is 0.484 with 1455 distinct domains from among the top 5 domains for the 2000 users. This value suggests that there is a significant variation in the top activities among the different users.

These above variational statistics imply that the methods to extract features for separating noise from the representative URLs have to adapt to changing user patterns. In particular, the variation in the total traffic and the timestamp patterns necessitates user-adaptive solutions for burst detection that we will present in Section 5.

## 3 OUR METHODOLOGY

In this section, we present an overview of our methodology to automatically classify web-domains into intentional and unintentional traffic and to use this classification for identifying URLs representative of user activity. The key feature of this methodology is the usage of novel features derived from the burst decomposition of a user's web-trace that improves the accuracy of the classification, offsetting the loss due to URL truncation.

The main intuition behind our methodology is that a user's browsing activity consists of several data bursts. These data bursts correspond to micro user actions, such as a web click or a chat reply. In each burst, there are some URLs representing the user activity intermixed with other unintentional web-traffic such as advertisements, web-analytics etc and secondary URLs corresponding to multimedia associated with the representative URL. Our statistical methodology decomposes the web-trace back into its constituent data bursts. It then leverages specialized features from data bursts (e.g., the position of a URL in a data burst, the number of unique URLs in a data burst, burst duration, burst download size etc.) to segregate the representative web-domains from the remaining web-domains. In Section 6, we show that the usage of features derived from data burst help in significantly improving the accuracy of the segregation task.

A key challenge in our methodology is the decomposition of the web-trace into data bursts. As highlighted already in Section 2, there is a considerable variation in the traffic patterns of different users. We found that even the distribution of inter-arrival time of HTTP records is very different for different users. This makes is particularly difficult to model these data bursts and to find good thresholds to decompose the web-trace into data bursts. We solve this problem by having different thresholds for different users and ensuring that the threshold computing function is robust with respect to the distribution shape. This is achieved using a novel technique to generate thresholds for each user that adapts to any distribution of inter-arrival time.

## 4. INTER-ARRIVAL TIME DISTRIBUTION MODELS

In this section, we study the inter-arrival time of HTTP records with a view to finding good thresholds that will decompose a user's traffic-trace into data bursts.

As described in Section 3, the key concept behind burst is that when a user performs a micro action like web click, chat reply etc., it not only generates many HTTP records related to the representative activity, but also a large number of secondary records such as advertisements, web analytics, web-scripts etc. These records are all intermixed. When the user completes the current micro-action, e.g. reading the current web page, and starts a new one, e.g. opening the next page, a new burst is generated with its associated records. So, the observed inter-arrival time samples are the mixing results of within-burst and out-oof-burst records. However, we expect that the within-burst HTTP records are closer together and the out-of-burst records are far apart in time. By computing an appropriate threshold on the inter-arrival time, we hope to be able to decompose the traffic into its constituent bursts.

Since traffic patterns (including the inter-arrival time) for different users are very different (see the green histogram in Figure 4[1] for three different users), we can't expect a global threshold to work well for all users. Instead, we compute a different threshold for each user specific to her traffic pattern. If the difference between the time-stamp of a record and its predecessor is greater than the computed threshold for that user, the record marks the beginning of a new burst. Otherwise, the record belongs to the burst of its predecessor.

To learn the separation threshold for each user, our first approach is to learn the probability density function of inter-arrival time for the users. We hope that by computing the best-fitting parameters for this density function for each user and defining the threshold as a function of those parameters, we can decompose the traffic trace for each user into its constituent bursts. Later, we will show that this approach does not work as well as we hope, but by adapting the threshold to each individual user's traffic pattern rather than a global shape of inter-arrival time, we can achieve fairly good burst decomposition.

**Distribution fitting functions**

We consider the models of exponential and pareto distribution functions to fit the inter-arrival time samples of all users. Specifically, we use the following functions:

- Exponential distribution (EXP):

$$p_{EXP}(x) = f_\lambda(x) = \lambda \exp(-\lambda x), \tag{2}$$

- Pareto distribution (PARETO):

$$p_{PRT}(x) = g_\alpha(x) = \alpha x_m^\alpha x^{-\alpha-1}, \tag{3}$$

In Equation 3, $x_m$ is the smallest value in the support of the pareto distribution. In addition, we use the following mixture models:

- Mixture of two exponential distributions (EXP$_2$):

$$p_{EXP2}(x) = w f_{\lambda_1}(x) + (1-w) f_{\lambda_2}(x), \tag{4}$$

- Mixture of two pareto distributions (PRT$_2$):

$$p_{PRT2}(x) = w g_{\alpha_1}(x) + (1-w) g_{\alpha_2}(x) \tag{5}$$

The intuition behind the mixture approximation is that one component with high arrival rate is for within-burst records and the other is for out-of-burst records.

During the experiment with inter-arrival time, in general, we observed that the exponential component matches with the within-burst records while the heavy tailed pareto component is better for out-of-burst records. Hence, we use another function form, the concatenation of exponential and pareto distribution (EXP_PRT):

$$p_{EXP\_PRT}(x) = z[\exp(-\lambda x)I(x \le d) + cx^{-\alpha-1}I(x > d)], \tag{6}$$

where $I(.)$ is the indicator function, z is the density normalization constant and the constant c is to make the function continuous.

These five distributions are fitted with per-user samples and all the parameters X, $\alpha$, w and d for each user are estimated by Maximum Likelihood Estimation (MLE) method.

**Threshold parameter based on density function**

An important thing to note here is that our goal is not just to model the inter-arrival density function, but to model it in a parameterized way that provides an intuition for identifying the threshold for burst decomposition. Kernel density approximation may be well-matched for the target density but cannot be used as it does not imply any meaning of record types.

The mixture models of the standard exponential and pareto functions portray such an intuition. For example, in the method EXP$_2$, the exponential component with high arrival rate is supposed to contain all within-burst records;

so, its 99% quantile can be used as a threshold to separate the records types. Or in the method EXP_PRT, the location parameter d can be used as the threshold as it is the boundary of the exponential component for within-burst records and the heavy-tail pareto distribution for out-of-burst records.

### 4.1 Empirical evaluation of this approach

We consider the inter-arrival time distribution of various users to figure out (i) whether or not our basic intuition of a user's data traffic as essentially consisting of a series of burst is true, (ii) which one of the considered functions best fits the inter-arrival time distribution of users and (iii) how well does the best fitting function matches the inter-arrival time distribution of users. Herein, we present our results:

**Intuition confirmation**

In general, we observed that for most users, there are two well-separated components in the inter-arrival time sample. We also observe that for most users, the exponential function matches the within-burst component fairly well and the tail of the pareto function matches the portion of human activity with long delay, corresponding with the out-of-burst records. In addition, the positive skewness of both exponential and pareto distributions implies the existence of compacted within-burst records, which have small inter-arrival time. All of these observations confirm our basic intuition that a user's data-traffic primarily consists of data bursts. Furthermore, the two components of within-burst and out-of-burst samples in the inter-arrival time distribution are usually separable.

**Best-fitting function**

Next, we consider the modelling of inter-arrival time samples. We compare the fitness of all these distributions by using Akaike information criterion (AIC) [1], based on the Kullbeck-Leiber discrepancy between the true unknown model and the best estimated model of the assumed family and Bayesian information criterion (BIC) [8], based on the Laplace approximation of the marginal likelihood. As seen in Table 1, both AIC and BIC are significantly better5 (lower) for EXP_PRT function presented in Equation (6). We thus conclude that among the models that we considered, the EXP-_PRT function, capturing our intuition of exponential function fitting the within-burst component and tail of the pareto function matching the out-of-burst component, is the best fit.

Table 1: Evaluation of AIC/BIC ($x1e^6$) of different density approximations.

|     | EXP | EXP2 | PRT | PRT2 | EXP_PRT |
| --- | --- | --- | --- | --- | --- |
| AIC | 291.14 | 179.77 | 118.20 | 118.21 | 59.59 |
| BIC | 291.17 | 179.86 | 118.23 | 118.30 | 59.68 |

**Error in fitting the best function**

Figure 4[1] shows the distribution fitting of EXP2, PRT2 and EXP_PRT functions for three different users. We find that while the EXP_PRT function fits the target inter-arrival time distribution of the first two users (Figure 4[1]a and Figure 4[1]b) very well, it is a poor match for the third user (Figure 4[1]c). We quantify the density approximation error by the following statistic:

$$S_b = \int_x |p(x) - q(x)| dx, \tag{7}$$

Here, $p(x)$ is the target kernel density as interpolated (from the inter-arrival time distribution of the user) by a kernel density approximation function. The function $q(x)$ is the one that we use to fit our target distribution. The error statistic is calculated by numerical integration.

Our error statistic ranges from 0 to 2, where 0 corresponds to a perfect fit. The closer the error statistic is to 1.0, the poorer is the fit, and a value of greater than 1.0 reflects an extremely poor fit. The error measurements of the method EXP_PRT for Figures 4[1]a to 4[1]c are 0.46, 0.26 and 0.84 respectively.

Figure 5[1] presents the variation in the value of our error statistic for various fitting functions over all users. Again, we observe that the EXP_PRT function results in the lowest error (even with this error statistic). However, this is still a poor fit. The median user has an error of 0.72, which means that about 50% of the users have approximation errors $S_{b,EXP\_PRT}$ larger than 0.72. We consider that this is too high an error to be useful for developing an analytics system using it. More specifically, the thresholds based on such a poorly fitting function are unlikely to result in a good burst decomposition.

The above analysis suggests that these density functions are not flexible enough to accommodate highly varied and personalized inter-arrival time of different users. Thus, there is a need for a robust technique to separate within-burst and out-of-burst records that is independent of the personalized distribution shape of a user.

## 5. BURST DECOMPOSITION USING ADAPTIVE THRESHOLDS

In this section, we propose a robust burst decomposition algorithm that is independent of the distribution shape. Our technique only relies on the general characteristics of the inter-arrival time samples observed in Section 4. We view the burst decomposition as a clustering problem, where the goal is to group consecutive records into HTTP bursts (clusters) that represent a unique human activity. Since the number of clusters in this problem cannot be pre-determined, we use threshold based algorithms to chop the traffic into data bursts. However, unlike in the last section, we want our threshold to adapt itself to any distribution of inter-arrival time samples. Thus, the main question that we address in this section is to determine the function for the adaptive threshold in terms of distance, density and connectivity of a sample to its neighbors.

Ideally, we want the threshold to separate the within-burst component of high-arrival rate samples on the left (see the normal-scale red plots in Figure 4[1]) from the long tail of out-of-burst records on the right, without making any assumption on the shape of the curve (other than the fact that these two components exist). In other words, a good threshold $^*$ should satisfy the following conditions:

- $^*$ should be in a region with very low probability
- For $x < $ T, $p(x)$ should, generally, be high
- For $x > $ T, p(x) should, typically, have low value

Our first idea is simply to find a threshold, where the probability density function of inter-arrival time samples decays to fairly close to zero. This can be realized, for example, by dividing the inter-arrival time samples into bins $b_i$ of equal length, and finding the first bin (or a first small set of consecutive bins) for which the count $c_i$ of samples in that bin falls below a predefined threshold. However, the absolute value of this count varies significantly from one user to another. Even the normalized value of this count $\frac{ci}{\sum_{j=1}^{n} cj}$ acts as a poor threshold because there are users for which some early buckets have very small counts and the within-burst samples appear afterwards (see e.g., Figure 6[1] for one such user profile). Furthermore, such a threshold is sensitive to the ratio between the number of within-burst and out-of-burst records and this ratio varies significantly from one user to another.

Instead, we use $k_i = \frac{c_i}{\sum_{j=1}^{i} c_j}$, which is the probability that a time sample belongs to bin i, conditioning on the fact that it belongs to a bin less than or equal to $i$: $k_i = \Pr(x \in b_i | x \in b_{1:i})$, to determine the threshold. In a way, $k_i$ measures the contribution of the current bin to the accumulated probability.

Our algorithm (Item 5) starts from the smallest value and tries to find a decaying point, which is also the threshold, of the inter-arrival time density such that the extended probability by increasing decaying point is insignificant, compared to the accumulated probability at that point (as captured by $k_i$). Specifically, the threshold $T^*$ is found when the contributions of $J$ consecutive bins are less than a predefined probability, for a pre-specified parameter $J$.

The burst detection algorithm will group all the samples with inter-arrival time less than the obtained threshold into temporal bursts.

---

**Algorithm 1** Burst detection

1. Divide inter-arrival times into bins $b_i$ of length $l$ with counts $c_i$

2. Calculate $k_i = \frac{c_i}{\sum_{j=1}^{i} c_j}$

3. Find the smallest index $i^*$ that $k_{i^*+j} < p \;\; \forall j = 1..J$

---

(continued)

| **Algorithm 1** Burst detection |
| --- |
| 4. Define the inter-arrival threshold $\tau^{\star} = l \times i^{\star}$ |
| 5. Group consecutive URLs with inter-arrival times $\tau < \tau^{\star}$ into bursts. |

**Experimental evaluation**

A direct validation of our burst decomposition technique is not possible as this is an unsupervised clustering algorithm. We, therefore, rely on manually checking of burst grouping for a select set of users and argue that the validity of the algorithm is confirmed by its usefulness, which is shown in the form of improved classification accuracy for domain classification in the next section.

**Parameter estimation**

For estimating the values of the parameter $p$, thresholds obtained from the above algorithm are plotted accordingly to different values of $p$ in Figure 7[1] (only thresholds of 200 users are shown to avoid confusion). The threshold values for $p = 0.01$ are from 1 to 10 seconds, which is a reasonable minimum delay time for activities such as web browsing, reading, shopping, etc. Hence, this value of $p$ was used in our experimental results. Similarly, we determined a good value for parameter J to be 3 and for bin size to be 0.25, and used these values in our experiments.

**Inspecting a set of users**

The thresholds T$^{*}$ of three users (same as in Figure 4[1]) are shown in Figure 8[1] ($l = 0.25$ and $p = 0.01$ are chosen for the experiment). Even though the distribution shapes and the number of samples of three users are quite different, the algorithm still manages to find the decaying points (or the thresholds). These identified thresholds are to the right of the compacted within-burst inter-arrival time samples and are to the left of the distribution tail where the out-of-burst samples are scattered scarcely. This gives us confidence in using this algorithm for improving the accuracy of the domain classification in the next section.

**6. DOMAIN CLASSIFICATION**

In this section, we describe our classification model for identifying the representative URLs and show that it is possible to achieve very high accuracy for this task even with truncated URLs. Features extracted from the burst decomposition presented in Section 5 play a crucial role in significantly improving the accuracy of our classification model.

**Classification Model**

We use a logistic regression model for the domain classification problem. Our model for logistic regression is as follows:

$$y_i \sim \text{Bernoulli}(q_i), \tag{8}$$

$$\ln\left(\frac{q_i}{1 - q_i}\right) = \mu_i = \beta_0 + \sum_l \beta_l x_{i,l}, \tag{9}$$

where $y_i$ is the binary label ($y_i = 1$ if URL i is representative and $y_i = 0$ otherwise) and $x_{i,l}$ is the feature. The representative probability $q_i$ is connected with a linear predictor $\mu_i$ by the logit function. All the parameters are estimated by the Iteratively Re-Weighted Least Squares (IRWLS) method [10].

**Experimental set-up**

The procedure of the domain classification is as follows: First, we manually label 400 URLs into two classes: representative and non-representative domains. Then, we extract five batches of web traces of 2000 random users, perform the burst detection and obtain aggregated measurements independently for each batch. Finally, half of the labelled URLs of the first batch are used in training the classifier, which is validated by the other half in all five batches.

**6.1 Accuracy with Record-level Features**

We first show the accuracy that we can attain by only using the record-level measurements and ignoring the burst-level measurements.

**Record-level Features**

The key part of our modelling is feature engineering, or identifying the right set of features to achieve a high accuracy. For the record-level features, we use the aggregated measurements, shown in Table 2. These features were carefully selected to achieve a high accuracy with record-level features. These features are examined as covariates in our domain classification model.

Table 2: Aggregated measurements at record-level.

| Record measurements (wrt $R(i)$) | |
|---|---|
| | |
| $t_{r,l,k}$ | Quantile $k$ of the leading inter-arrival time |
| $t_{r,n,k}$ | Quantile $k$ of the next inter-arrival time |
| $S_{r,u,k}$ | Quantile $k$ of the upload size |
| $S_{r,d,k}$ | Quantile $k$ of the download size |

**Accuracy**

As shown in Table 3, the resultant accuracy with the record-level features is quite poor. For the five batches of web traces, the accuracy varies between 69.7% and 72.9%, implying that around 30% of the URLs are mis-classified. The AIC and BIC values are also significantly high.

Note that the key discriminating features (identified using the model selection procedure) for classification with record-level measurements were $x_{.,1} = (s_{r,d,75\%} - s_{r,d.25\%})$ and $x_{.,2} = s_{r,u,50\%}$. However, the discriminatory capacity of these features appears to be limited.

Table 3: AIC and classification accuracy with record-level features.

| | AIC | BIC | Classification accuracy | | | | |
|---|---|---|---|---|---|---|---|
| $C_R$ | 242.82 | 252.72 | 69.7 | 72.9 | 71.0 | 70.8 | 71.4 |

**6.2 Accuracy with Burst-level Features**

Next, we show how the accuracy improves with burst-specific measurements.

**Burst-related Features**

From the burst detection results, we evaluate some burst-specific measurements. For each URL i, there is a list of aggregated measurements, shown in Table 4. In the table, $B(i)$ ($R(i)$) denote the set of bursts (records) containing URL i. We note that the two measurements, $o_{bj}$ and $u_{b,j}$ (j = 1 : 2), in Figure 9[1] prove to be particularly important in analysing the domain classification results. Similar to record-level features, these aggregated measurements are examined as covariates in our domain classification model.

Table 4: Aggregated measurements at burst-level.

| Burst measurements (wrt B(i)) | |
|---|---|
| | |
| $o_{b,j}$ | The probability that URL I is ranked j-th ($j$=1:9) |
| $u_{b,j}$ | The probability that a burst containing URL $i$ has $j$ unique URLs (j = 1 : 9) in the burst |
| $d_{b,k}$ | Quantile $k$ of burst duration |
| $t_{b,l,k}$ | Quantile $k$ of the leading inter-arrival time of a burst |
| $t_{b,n,k}$ | Quantile $k$ of the next inter-arrival time of a burst |
| $s_{b,u,k}$ | Quantile $k$ of the burst upload size |
| $s_{b,d,k}$ | Quantile $k$ of the burst download size |

**Discriminating features**

We perform a model selection procedure, based on AIC, to select the most prominent features from the list of Table 4 for the above model [10]. It turns out that the feature $\bar{o}_{b,j=1} = o_{b,j=1} - u_{b,j=1}$ is among the selected ones, with high significance. The corresponding estimated coefficients $\beta_l$ are shown in Table 5 along with standard deviation and $p$-values. The intuition behind this is that the URLs which usually come first in bursts are more likely belonging to the representative class. Thus, $o_{b,j=1}$ is a good distinguishing feature between representative domains *(SEARCH ENGINE, WEB PORTAL)* and non-representative domains *(ADS, CDN)* (as shown in Figure 9[1]a). However, solely using this feature will misclassify domains from *STATIC CONTENT* class as representative (as these are also likely to come first in burst). This class includes many CSS HTML pages and static images on web-pages. The exceptions such as those from *STATIC CONTENT class* have a high probability of being alone in their bursts, as shown by $u_{b,j=1}$ in Figure 9[1]b. Thus, the feature $\bar{o}_{b,j=1}$ is able to distinguish between most representative and non-representative domains.

Note that even though *SEARCH ENGINE* domains also have a high value of $u_{b,j=1}$, their value of $\bar{o}_{b,j=1}$ is still high enough for $\bar{o}_{b,j=1}$ feature to act as a discriminator. From the table, we can also see the representative penalties from being in small bursts of few unique records.

Table 5: Estimated values ($\beta_l$), standard deviation ($\sigma_\beta$), $p$-values and significance (SIG) of features.

| Feature | $\beta_l$ | $\sigma_\beta$ | $p$-value | SIG |
|---|---|---|---|---|
| Intercept | -3.30 | 0.52 | 2.2e - 11 | *** |
| $\bar{o}_{b,j=1}$ | 22.87 | 3.32 | 5.5e - 12 | *** |
| $u_{b,j=2}$ | -9.51 | 3.45 | 0.01 | **. |

Table 6: Type I/II errors.

| $h$ | 0.500 | 0.166 |
|---|---|---|
| Precision | 0.93 | 0.77 |
| Negative Predictive Value | 0.90 | 0.95 |
| Sensitivity | 0.78 | 0.91 |
| Specificity | 0.97 | 0.87 |
| Accuracy | 0.91 | 0.88 |

**Thresholding the classifier**

The relation between the linear predictor $\mu_i$ and representative probability $q_i$ is plotted in Figure 10[1], together with the binary labelled observations and histogram of each domain class. The red vertical line represents the decision boundary such that all URL with $q_i \geq h = 0.5$ are put into representative class and the other are in the non-representative class. Hence, the ratio between the points on the left and right of the red line at row $q = 0$ correspond to the ratio between true negative-ness and false positive-ness. Similarly, the ratio between true positive-ness and false negative-ness is at row $q = 1$.

In Figure 10[1], we use the boundary value h = 0.5, corresponding to the case of minimizing the number of mis-classification cases, to separate between representative and non-representative records. However, from a decision theory point-of-view, as the false-positive and false-negative penalties are usually different, we may want to optimize this boundary value for a cost function of these penalties. For the application of generating an application profile of a user, one may want to put a higher penalty for false negatives (representative URLs incorrectly classified as non-representatives) than that for false positives (non-representative URLs correctly classified as representative). This is because when determining the activity of a burst, there is an opportunity to prune out the noise (non-representative URLs) further, while the representative URLs lost in the process are unlikely to be re-inserted later on. Thus for this application, we might be more interested in improving sensitivity, that is defined in this case as the ratio of correctly classified representative URLs to the total number of representative URLs. For other applications, there may be a higher emphasis on accuracy.

Because the penalties are problem-specific and not obvious in many contexts, we show the trade-off between true positive rate (complement of false negative rate) and false positive rate with the receiver operating characteristic curve (ROC) in Figure 11[1]. The figure also illustrates another optimal boundary point in purple for the case of minimizing the sum of false positive and false negative rates. The high value of area under the curve (AUC) again confirms the performance of the classifier [4].

Table 6 provides further statistics on the trade-off between false positives and true negatives for two different value of the boundary that were shown in Figure 11[1]. These trade-offs are characterized in terms of precision, negative predictive value, sensitivity, specificity and accuracy. We note that while the value of $h = 0.5$ results in higher precision and accuracy, the h = 0.166 results in better sensitivity. Thus for applications with more emphasis on accuracy, we may choose h = 0.5, while for applications where sensitivity is crucial, we may select h = 0.166.

Table 7: AIC and classification accuracy.

|  | AIC | BIC | Classification accuracy | | | | |
|---|---|---|---|---|---|---|---|
| $C_B$ | 112.80 | 122.69 | 90.0 | 88.3 | 90.2 | 89.2 | 90.5 |
| $C_R$ | 242.82 | 252.72 | 69.7 | 72.9 | 71.0 | 70.8 | 71.4 |

**Accuracy**

The usage of burst-related features, and in particular $\overline{o}_{b,j=1}$, results in significant improvement in the accuracy of the classification model. As shown in Table 7, the accuracy improves from around 70% to around 90%, AIC value drops from 242.82 without burst-related features to just 112.8 with burst related features and the BIC drops from 252.72 to 122.69.

Altogether, these results show that it is possible to achieve a 90% accuracy in segregating representative URLs from non-representative URLs by using burst-related features on truncated URL web-traces. In other words, the burst de-composition and the extraction of specific features from the burst make up for the loss in accuracy due to URL truncation.

Note that this accuracy is in terms of the number of URLs correctly classified as being representative or non-representative. Popular URLs are more likely to be correctly classified by our methodology and thus, the accuracy in terms of number of records, download size (e.g., for Questions such as how much download happened corresponding to each activity type) or number of bursts (identifying the activity for each burst) is likely to be significantly higher.

## 7. RELATED WORK

The past research related to identifying URLs representing user activities fall into the following categories:

1. Providing an activity description at a very coarse level (e.g., peer-to-peer networking, HTTP browsing, chatting etc.) by filtering out URLs based on connection port number, packet payload, statistical traffic patterns etc. [7, 12], primarily for the purpose of network traffic analysis and traffic classification (e.g. for CDN).

2. Manual blacklisting of URLs to filter out spam, adult content or advertisements.

3. Filter out the unintentional traffic by relying on URL suffixes (e.g., $.mp_3$, .js etc.), URL header patterns, HTTP referrers and HTTP blacklists.

[WORK: need some refs on second category of URL - blacklist filtering and third category].

The first category of coarse-grained application-type classification is different from our representative URL identification problem as our goal is to segregate URLs at the HTTP domain-level (HTTP browsing itself is just one class for the coarse-grain classification). From the behavioural analysis' perspective, traffic classification cannot provide a fine-grained insight into user web activities such as reading, shopping, researching, etc.

The second category has obvious scalability limitations. Given that many new web-sites appear every day in different languages and different countries that may have very local characteristics, it is very expensive to manually maintain the blacklists. Furthermore, the existing blacklists are for specific purposes (such as spam, adult content, advertisements) and do not contain all non-representative URLs (such as images and videos associated with the main content). In fact, it is difficult to even filter out all unintentional traffic using only these blacklists.

The third category critically relies on full HTTP web-traces. The full HTTP URLs can reveal sensitive user information and the operators are getting wary of collecting, storing and sharing such detailed traces. As argued in Section 6, truncation of the web-traces to preserve user privacy causes significant loss in accuracy of classification because many of the features (such as URL suffices) are no longer available. Our approach can be seen as a way to offset the loss in accuracy by using advanced features extracted from burst decomposition of the web-trace.

In addition, there is also some work (e.g., [11]) on inferring user activity in a setting where it is allowed to take a peek into the user's full network traffic for a short duration of few seconds. Contrary to that, our interest is in performing behavioural analysis with truncated URLs and a limited sample of network traffic.

## 7.1 Inter-arrival Time Analysis

Crovella and Bestavros [3] and Wang et al. [9] worked on the counting process modelling of download size, open connection, disk operation request, etc, which is closely related to the inter-arrival time. However, these work focus much on the self-similarity property of the time series and do not provide a clear distinction and separation of different HTTP record types. So, the later issue is addressed by below modelling, characterizing the intertwining effect of both representative and non-representative traffic in users' web logs.

Karagiannis et al [5] showed that the accuracy of exponential distribution varies with different backbone packet traces. In general, exponential distribution has nice mathematical features such as memoryless-ness and closed-form solutions of sum-concat-minimum operators, its light tailed property may not be a good match to some datasets. In a more general context of human dynamics, Barabasi [2] discussed about the bursty nature of human actions and argued that heavy tailed distribution pareto is a better match than exponential distribution with email data analysis. Both works analysed aggregated datasets, but not per-user datasets, which are much more dynamic.

Kleinberg [6] proposed a discrete state space model as a burst detection algorithm, with applications in email streams. However, the focus of this solution is the varying exponential distribution's rate, modelled by the hidden state. The rate characterizes the email arrival of a temporal local period but does not provide a clear distinction between within-burst and out-of-burst records. For example, even when the rate goes down to the smallest value, the positive skewness of exponential distribution still favours small inter-arrival time samples. After testing out the algorithm, we think it is not suitable to the problem of separating two inter-arrival time classes. Finally, there are clustering algorithms based on local constraints, but not dependent on a predefined number of clusters. For example, an algorithm may check the distance, density, connectivity or modularity of a sample to its neighbours and form a cluster when the local condition is satisfied [NEEDS REFS? These refs are more about theoretical methodologies, not burst-detection solution refs]. The question is whether that local condition is matching with the problem at hand. Belonging to this class, our proposed algorithm in this section is a light-weighted threshold-based algorithm in which the threshold is derived on per-user inter-arrival time distribution.

## 8. CONCLUSION

We have proposed a novel methodology to identify URLs representing user activities from a truncate URL web-trace. Our statistical methodology offsets the loss in accuracy due to URL truncation by considering additional features derived from the burst measurements. To enable the computation of burst-related features, we propose a novel technique for burst decomposition.

Once the set of representative URLs is identified, one can compare the (live) streaming web-traces of users to infer medium grained activities in real-time and offer personalized services. Burst decomposition can play a critical role in this part as well. Once the user-adaptive thresholds are identified, our burst decomposition algorithm can be used to decompose the streaming trace into bursts and a unique URL representing the activity in that burst can be identified using the identified set of representative URLs.

We believe that our methodology can be very useful for providing personalized services, while being considerate about more sensitive user privacy data. More generally, we hope that our work will lead to deeper studies on the usage of truncated URL traces, as a means to striking the fine balance between personalized services and user privacy.

**References**

[1] AKAIKE, H. A new look at the statistical model identification. Automatic Control, IEEE Transactions on 19, 6 (1974), 716-723.

[2] BARABASI, A. L. The origin of bursts and heavy tails in human dynamics. Nature 435 (2005), 207-211.

[3] CROVELLA, M., AND BESTAVROS, A. Self-similarity in world wide web traffic: evidence and possible causes. IEEE/ACM Transaction on Networking 5, 6 (1997), 835-846.

[4] FAWCETT, T. An introduction to roc analysis. Pattern Recognition Letters 27, 8 (2006), 861-874.

[5] KARAGIANNIS, T., MOLLE, M., FALOUTSOS, M., AND BROIDO, A. A nonstationary Poisson view of internet traffic. In INFOCOM (2004).

[6] KLEINBERG, J. M. Bursty and hierarchical structure in streams. In KDD (2002), pp. 91-101.

[7] NGUYEN, T. T. T., AND ARMITAGE, G. J. A survey of techniques for internet traffic classification using maching learning. IEEE Communications Surveys and Tutorials 10, 1-4 (2008), 56-76.

[8] SCHWARZ, G. Estimating the dimension of a model. The Annals of Statistics 6, 2 (1978), 461-464.

[9] WANG, M., CHAN, N. H., PAPADIMITRIOU, S., FALOUTSOS, C., AND MADHYASTHA, T. M. Data mining meets performance evaluation: fast algorithms for modelling bursty traffic. In ICDE (2002), pp. 507-516.

[10] WOOD, S. N. Generalized additive models: an introduction with R. Chapman and Hall/CRC Texts in Statistical Science Series. Chapman and Hall/CRC Press, 2006.

[11] ZHANG, F., HE, W., LIU, X., AND BRIDGES, P. G. Inferring users' online activities through traffic analysis. In Proceedings of the Fourth ACM Conference on Wireless Network Security (2011), WiSec'11, ACM, pp. 59-70.

[12] ZHANG, J., XIANG, Y., WANG, Y., ZHOU, W., ZIANG, Y., AND GUAN, Y. Network traffic classification using correlation information. IEEE Trans. Parallel Distrib. Syst. 24, (2013), 104-117.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of characterising user behaviour in an IP based data network, based on a data stream comprising an indication of IP traffic associated with said user;
said method comprising:

receiving an identifier and an indication of arrival time associated with a data point in said data stream;
determining an inter-arrival time between adjacent data points in said data stream;
analysing a plurality of inter-arrival times in said data stream associated with said user to determine a personalised user inter-arrival time threshold; and
using said determined personalised user inter-arrival threshold to group said data points in said data stream into one or more clusters, each cluster of data points representing an action of said user within said IP based data network.

2. A method according to claim 1, wherein said identifier associated with a data point comprises: at least one of: a URL, a truncated URL, or an IP address.

3. A method according to claim 1 or claim 2, wherein said analysing of a plurality of inter-arrival times comprises:

categorizing inter-arrival times determined in respect of said data points in said data stream associated with said user into one of a set of bins according to determined value;
assessing a distribution of inter-arrival times within said bins to identify said personalised user inter-arrival time threshold.

4. A method according to any preceding claim, further comprising:

determining a data point in each cluster representative of said action of said user within said IP based data network.

5. A method according to claim 4, wherein determining a data point in each cluster representative of said action of said user within said IP based data network comprises:

determining at least one characteristic of said cluster;
comparing said at least one characteristic of said cluster with a classification of said characteristic based on a classification of said characteristic across historic clusters identified in at least one data stream associated with a user of said IP based data network.

6. A method according to claim 5, wherein said classification of said characteristic of said cluster across historic clusters is performed across clusters identified in a plurality of data streams associated with a plurality of users of said IP based data network.

7. A method according to claim 5 or claim 6, wherein said least one characteristic of said cluster comprises: one or more of: data point order within said cluster; number of unique data point identifiers within said cluster; cluster duration; cluster inter-arrival time; and cluster size.

8. A method according to any one of claims 4 to 7, wherein determining a data point in each cluster representative of said action of said user within said IP based data network comprises:

   determining at least one characteristic of each data point in said cluster;
   comparing said at least one characteristic of said data point with a classification of said characteristic based on a classification of said data point characteristic across historic data points.

9. A method according to claim 8, wherein said least one characteristic of said data point comprises: one or more of: leading inter-arrival time of said data point; following inter-arrival time of said data point; download size associated with said data point; upload size associated with said data point.

10. A method according to any preceding claim comprising:

    performing real-time characterisation of user behaviour in relation to a data stream associated with a user, based on a previously determined personalised user inter-arrival threshold and a previously performed classification of a cluster characteristic and data point characteristic.

11. A method according to claim 10, wherein performing real-time characterisation of user behaviour comprises:

    extracting an identifier and an indication of arrival time associated with each data point in a streamed data stream; using said determined personalised user inter-arrival threshold to group said data points in said streamed data stream into one or more clusters, each cluster of data points representing an action of said user within said IP based data network; and
    determining a data point in each cluster representative of said action of said user within said IP based data network, based on a classification of a cluster characteristic performed across historic clusters identified in at least one data stream associated with a user of said IP based data network.

12. A method according to claim 10 or claim 11, wherein performing real-time characterisation of user behaviour comprises:

    extracting an identifier and an indication of arrival time associated with each data point in a streamed data stream; using said determined personalised user inter-arrival threshold to group said data points in said streamed data stream into one or more clusters, each cluster of data points representing an action of said user within said IP based data network; and
    determining a data point in each cluster representative of said action of said user within said IP based data network, based on a classification of a data point characteristic performed across historic data points identified in at least one data stream associated with a user of said IP based data network.

13. A method according to any preceding claim, wherein said data point in each cluster representative of said action of said user within said IP based data network is mapped to a category of user activity within said network.

14. A computer program product operable, when executed on a computer, to perform the method of any one of claims 1 to 13.

15. A device operable to characterise user behaviour in an IP based data network, based on a data stream comprising an indication of IP traffic associated with said user; said device comprising:

    reception logic operable to receive an identifier and an indication of arrival time associated with a data point in said data stream;
    determination logic operable to determine an inter-arrival time between adjacent data points in said data stream;
    analysis logic operable to analyse a plurality of inter-arrival times in said data stream associated with said user to determine a personalised user inter-arrival time threshold; and
    cluster logic operable to use said determined personalised user inter-arrival threshold to group said data points in said data stream into one or more clusters, each cluster of data points representing an action of said user within said IP based data network.

EP 3 018 620 A1

| Client Computer | | Server System |
|---|---|---|

Client Computer

Application Client

Networking Client

Application virtual connection

Operator Networking Switch

Network connection

Network connection

Server System

Application Server

Networking Server

HTTP traces

Behavior Analysis System

FIG. 1 Data Extraction Environment

Batched data

1: Burst decomposition model

Record bursts

2: Representative domain characterization

Decomposition model

Streaming data

3: Real-time representative activity identification

Domain characterization results

On-the-fly bursts & representative records

Real-time user behavior analysis

FIG. 2 User Behavior Analysis System

FIG. 3

FIG. 4 Performance of Module B

| URL | Inter-arrival Time |
|---|---|
| BURST 1 | |
| g-ecx.images-amazon.com | 4.51 |
| *amazon.com* | *0.19* |
| g-ecx.images-amazon.com | 1.25 |
| s0.2mdn.net | 0.01 |
| shasta.vizu.com | 0.88 |
| facebook.com | 0.30 |
| fls-na.amazon.com | 0.01 |
| BURST 2 | |
| *facebook.com* | *6.37* |
| profile.ak.fbcdn.net | 1.09 |
| facebook.com | 1.98 |
| BURST 3 | |
| pct.channel.facebook.com | 856.24 |
| *facebook.com* | *0.02* |
| fbstatic-a.akamaihd.net | 0.10 |

## FIG. 5

FIG. 6 User Behavior Analysis System with Location System

(a)

(b)

(c)

FIG. 1¹

FIG. 2¹

EP 3 018 620 A1

FIG. 3¹

FIG. 4¹

FIG. 5¹

FIG. 6¹

FIG. 7¹

FIG. 8¹

(a)

(b)

FIG. 9¹

FIG. 10¹

FIG. 11¹

Europäisches
Patentamt

European
Patent Office

Office européen
des brevets

**EUROPEAN SEARCH REPORT**

Application Number

EP 14 30 6790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANTONELLIS P ET AL: "Algorithms for clustering clickstream data", 31 March 2009 (2009-03-31), INFORMATION PROCESSING LETTERS, AMSTERDAM, NL, PAGE(S) 381 - 385, XP025990929, ISSN: 0020-0190 [retrieved on 2009-02-25] * the whole document * | 1-15 | INV. G06Q30/02 |
| X | US 8 856 131 B1 (LIU JIA [US] ET AL) 7 October 2014 (2014-10-07) * abstract; figure 2 * * column 1 - column 2 * | 1-15 | |
| X | US 2012/072997 A1 (CARLSON MARK [US] ET AL) 22 March 2012 (2012-03-22) * paragraph [0082] - paragraph [0095] * | 1-15 | |

TECHNICAL FIELDS
SEARCHED        (IPC)

G06Q

The present search report has been drawn up for all claims

| Place of search | Date of completion of the search | Examiner |
|---|---|---|
| Munich | 21 April 2015 | Lopes Margarido, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 30 6790

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2015

| Patent document cited in search report | | Publication date | Patent family member(s) | Publication date |
|---|---|---|---|---|
| US 8856131 | B1 | 07-10-2014 | NONE | |
| US 2012072997 | A1 | 22-03-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AKAIKE, H.** A new look at the statistical model identification. *Automatic Control, IEEE Transactions,* 1974, vol. 19 (6), 716-723
- **BARABASI, A. L.** The origin of bursts and heavy tails in human dynamics. *Nature,* 2005, vol. 435, 207-211
- **CROVELLA, M. ; BESTAVROS, A.** Self-similarity in world wide web traffic: evidence and possible causes. *IEEE/ACM Transaction on Networking,* 1997, vol. 5 (6), 835-846
- **FAWCETT, T.** An introduction to roc analysis. *Pattern Recognition Letters,* 2006, vol. 27 (8), 861-874
- **KARAGIANNIS, T. ; MOLLE, M. ; FALOUTSOS, M. ; BROIDO, A.** A nonstationary Poisson view of internet traffic. *INFOCOM,* 2004
- **KLEINBERG, J. M.** Bursty and hierarchical structure in streams. *KDD,* 2002, 91-101
- **NGUYEN, T. T. T ; ARMITAGE, G. J.** A survey of techniques for internet traffic classification using maching learning. *IEEE Communications Surveys and Tutorials,* 2008, vol. 10 (1-4), 56-76

- Estimating the dimension of a model. **SCHWARZ, G.** The Annals of Statistics. 1978, vol. 6, 461-464
- **WANG, M. ; CHAN, N. H. ; PAPADIMITRIOU, S. ; FALOUTSOS, C. ; MADHYASTHA, T. M.** Data mining meets performance evaluation: fast algorithms for modelling bursty traffic. *ICDE,* 2002, 507-516
- Generalized additive models: an introduction with R. Chapman and Hall. **WOOD, S. N.** Statistical Science Series. Chapman and Hall/CRC Press, 2006
- Inferring users' online activities through traffic analysis. **ZHANG, F. ; HE, W. ; LIU, X. ; BRIDGES, P. G.** Proceedings of the Fourth ACM Conference on Wireless Network Security (2011), WiSec'11. ACM, 2011, 59-70
- **ZHANG, J. ; XIANG, Y. ; WANG, Y. ; ZHOU, W. ; ZIANG, Y. ; GUAN, Y.** Network traffic classification using correlation information. *IEEE Trans. Parallel Distrib. Syst.,* 2013, vol. 24, 104-117